# EUROPEAN PATENT APPLICATION

(11) **EP 4 247 105 A1**
(43) Date of publication of application: **20.09.2023**
(21) Application number: 21905706.4
(22) Date of filing: 14.12.2021
(51) Int. Cl.: H04W 76/27, H04W 76/19, H04W 40/22

(54) **COMMUNICATION METHOD AND COMMUNICATION APPARATUS**

(30) Priority: 15.12.2020 CN 202011479787; 15.01.2021 CN 202110057726
(71) Applicant: Huawei Technologies Co., Ltd., Shenzhen, Guangdong 518129 (CN)
(72) Inventor: YAO, Chuting, Shenzhen, Guangdong 518129 (CN); XU, Haibo, Shenzhen, Guangdong 518129 (CN); CAI, Yu, Shenzhen, Guangdong 518129 (CN)
(74) Representative: Gill Jennings & Every LLP
(86) International application number: PCT/CN2021/137851
(87) International publication number: WO 2022/127777

(57) **Abstract**

This application discloses a communication method and a communication apparatus. The communication method includes: A first device generates a first message, and sends the first message to a network device. The first message is used to resume a connection between the first device and the network device, and the first message further indicates a cause for the first device to resume the connection. Sending of the first message is triggered by sending RNA update by a second device, or the connection resumed by the first device is used by the second device to update an RNA. The cause that is for the first device to resume the connection and that is indicated by the first message may be set for updating the RNA by the second device or for updating the RNA of the second device. Therefore, the network device may determine a true cause for the first device to resume the connection, so that the first device is selectively in a connected state or an inactive state. This can prevent the first device from repeatedly entering the connected state due to a service of the second device, thereby reducing signaling overheads.

## Description

### CROSS-REFERENCE TO RELATED APPLICATIONS

This application claims priority to Chinese Patent Application No. 202011479787.6, filed with the China National Intellectual Property Administration on December 15, 2020 and entitled "METHOD FOR REDUCING RELAY UE SIGNALING WASTE", which is incorporated herein by reference in its entirety; and this application claims priority to Chinese Patent Application No. 202110057726.9, filed with the China National Intellectual Property Administration on January 15, 2021 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In a currently proposed user equipment (user equipment, UE) relay (relay) technology, there is a relay manner in which remote (remote) UE is visible to a RAN. In this relay manner, the remote UE can implement communication link switching. In this relay manner, the remote UE can establish a connection to an access network device by using relay UE, and enjoy a service provided by an access network. For example, layer 2 (layer 2, L2) remote UE may be in an idle state or an inactive state. For remote UE in an idle state or an inactive state, the relay UE may help the remote UE perform paging listening, to reduce power consumption of the remote UE.

However, when the relay UE helps the remote UE perform paging listening, the relay UE and the remote UE need to be in a same radio access network (radio access network, RAN)-based notification area (RAN-based notification area, RNA), to ensure that a network device can find the remote UE. If the relay UE and the remote UE are not in a same RNA, the relay UE needs to indicate the network device to update an RNA with which the relay UE registers. Similarly, if the remote UE also moves out of a corresponding area, the remote UE needs to update an RNA to enable the remote UE to be found by a network.

The relay UE needs to establish a connection to the network device regardless of whether the relay UE updates the RNA or the remote UE updates the RNA. Currently, a cause for the relay UE to request to establish or resume a connection to the network device cannot indicate a true intention of establishing or resuming the connection by the relay UE. In other words, the network device does not learn of a true intention of performing RRC resume by the relay UE. For example, the network device does not learn whether the relay UE requests to resume the connection because of the remote UE. According to a current procedure, provided that the remote UE updates the RNA, the relay UE needs to re-enter a connected state, that is, perform a random access process for a plurality of times. Consequently, a large amount of signaling interaction needs to be involved, resulting in high signaling overheads.

### SUMMARY

Embodiments of this application provide a communication method and a communication apparatus, so that a network device determines a true cause for relay UE to establish or resume a connection, and enables the relay UE to be selectively in a connected state or an inactive state, to prevent the relay UE from repeatedly entering the connected state for a plurality of times, thereby reducing signaling overheads.

According to a first aspect, a first communication method is provided. The method may be performed by a first communication apparatus. The first communication apparatus may be a communication device or a communication apparatus, for example, a chip system, that can support the communication device in implementing a function required in the method. An example in which the communication device is a first device (relay UE) is used below for description. The method includes:

The first device generates a first message, and sends the first message to a network device. The first message is used to resume a connection between the first device and the network device, and the first message further indicates a cause for the first device to resume the connection. Sending of the first message is triggered through RNA update by a second device, or the connection resumed by the first device is used by the second device to update an RNA (which may also be considered that the first message is used by the second device to update the RNA).

In this solution, the first device may send the first message, namely, a message for requesting to resume the connection to the network device, to the network device because the second device updates the RNA. A cause that is for the first device to resume the connection and that is indicated by the first message may be set for updating the RNA by the second device or for updating the RNA of the second device. In this way, the network device may determine a true cause for the first device to resume the connection, for example, the connection is resumed due to the second device. Therefore, the network device may enable the first device to be selectively in the connected state or the inactive state based on the true cause for the first device to resume the connection. For example, if the true cause for the first device to resume the connection is for the second device, the network device may then enable the first device to be in the connected state. This can prevent the first device from repeatedly entering the connected state due to a service of the second device, thereby reducing signaling overheads. For another example, if the true cause for the first device to resume the connection is for the first device, the network device may then enable the first device to be in the inactive state, to reduce power consumption of the first device.

In a possible implementation, there are a plurality of implementations for indicating, by the first message, the cause for the first device to resume the connection. For example, the following lists six indication manners:
In a first indication manner, the first message includes a first indication, and the first indication indicates the cause for the first device to resume the connection. In this manner, the first indication can indicate the cause for the first device to resume the connection, which is simple and direct.

In a second indication manner, the first message includes a first indication and a second indication, the first indication indicates the cause for the first device to resume the connection, and the second indication indicates whether the first device resumes the connection for the second device. In this manner, two levels of causes may be indicated by using the first indication and the second indication. For example, the first indication may indicate that the cause for the relay UE to resume the connection is a service cause, and the second indication may indicate whether the cause for the relay UE to resume the connection is for the relay UE or the remote UE.

In a third indication manner, the first message is sent over a first common control channel (common control channel, CCCH), and indicates that the first device resumes the connection for the second device. In this manner, a specific logical channel for sending the first message indicates that the first device resumes the connection for the second device. The network device may determine, based on the CCCH for sending the first message, whether the first device resumes the connection for the second device. To be specific, a resume request message of the first device is not used to indicate the cause for the first device to resume the connection, to avoid that the cause for the first device to resume the connection cannot be indicated due to a limited size of the resume request message.

In a fourth indication manner, the first message is sent over a first CCCH, and indicates that the first device resumes the connection for the second device, the first message includes a first indication, and the first indication indicates the cause for the first device to resume the connection. In this manner, the CCCH for sending the first message is used to indicate that the first device resumes the connection to the second device, and the first indication is also used to indicate the cause for the first device to resume the connection. In this way, that the cause for the first device to resume the connection cannot be indicated due to a limited size of a resume request message can be avoided, and the first indication may indicate a specific service for which the first device resumes the connection.

In a fifth indication manner, the first message is sent by using a resource included in a random access response message received by the first device, and before the first message is sent, a random preamble sent by the first device to the network device indicates that the first device performs random access for the second device. In this manner, the cause for the first device to resume the connection is indicated by using the resource for sending the first message, to avoid that the cause for the first device to resume the connection cannot be indicated due to a limited size of the resume request message.

In a sixth indication manner, the first message is sent by using a resource included in a random access response message received by the first device, the first message includes a first indication, the first indication indicates the cause for the first device to resume the connection, and before the first message is sent, a random preamble sent by the first device to the network device indicates that the first device performs random access for the second device. In this manner, the cause for the first device to resume the connection is indicated by using the resource for sending the first message and the first indication included in the first message. In this way, that the cause for the first device to resume the connection cannot be indicated due to a limited size of the resume request message can be avoided, and the first indication may indicate a specific service for which the first device resumes the connection.

In a possible implementation, the method further includes:
The first device receives a second message from the second device, where the second message indicates that the second device needs to update the RNA. In this solution, when the second device needs to update the RNA, the second device may trigger, by using the second message, the first device to send the first message to the network device.

In a possible implementation, the method further includes:
If RAN-based notification area code (RAN-based notification area Code, RAN-Areacode/RANAC) of a cell on which the first device currently camps does not belong to the RNA of the second device, the first device determines to send the first message to the network device. In this solution, if the first device determines that the first device and the second device are not located in a same RNA, the first device determines that the second device may subsequently need to update the RNA. In this case, the first device may send the first message to the second device, to prepare for the second device to update the RNA. For example, the first device may enter the connected state in advance, to shorten a delay of subsequently updating the RNA by the second device.

In a possible implementation, the second message includes RAN-Areacode included in the RNA of the second device, or the second message includes RAN-Areacode of a cell on which the second device currently camps. This solution lists two implementations in which the second message indicates the RNA of the second device.

In a possible implementation, the method further includes:
The first device broadcasts a fifth message, where the fifth message includes the RAN-Areacode of the cell on which the first device camps. To enable the second device to find, from a plurality of first devices, a first device located in a same RNA as the second device, the first device may broadcast the fifth message. In this way, the second device can be prevented from requesting a first device that is not located in the same RNA as the second device to help listen to paging, and reliability of helping the second device listen to the paging by the first device is ensured.

In a possible implementation, the method further includes:
After the second device completes the RNA update, the first device receives a fourth message from the second device, where the fourth message carries a first paging parameter, and the first paging parameter is used by the first device to listen to paging from the network device for the second device. After the second device updates the RNA, a paging parameter used to listen to paging may change. In this solution, after updating the RNA, the second device may notify the first device of a related paging parameter obtained after the RNA is updated, and subsequently request the first device to help the second device listen to paging, to avoid, as much as possible, that the first device misses listening to paging of the second device.

In a possible implementation, the fourth message further carries a second paging parameter, and the second paging parameter is used by the first device to listen to paging from a core network device for the second device. After updating the RNA, the second device may notify the first device of the second paging parameter obtained after the RNA is updated, and subsequently request the first device to help the second device listen to paging from the core network device, to avoid, as much as possible, that the first device misses listening to paging of the second device.

In a possible implementation, the fourth message further carries an updated RNA of the second device. The second device may notify the first device of the updated RNA, so that the first device may determine a valid RNA of the second device in advance based on the updated RNA of the second device, to determine whether the second device subsequently needs to perform an RANU. If the second device subsequently needs to perform an RANU, the first device may enter the connected state in advance. This shortens a delay of performing the RNAU by the second device.

In a possible implementation, the fourth message is further used to indicate that the second device completes the RNA update, and the first device may request a network to release an RRC connection of the first device, so that the first device can quickly enter an idle state or an inactive state, to reduce energy consumption of the first device.

In a possible implementation, the first indication may reuse an existing cause for resuming the connection or establishing the connection of the second device, or may introduce a new cause for resuming the connection or establishing the connection of the first device.

For example, the first indication indicates that the first device expects to keep in a radio resource control (radio resource control, RRC) connected state, that is, implicitly indicate that the first device may resume the connection due to the second device.

Alternatively, the first indication indicates that the cause for resuming the connection or establishing the connection is that the second device initiates signaling (ro-signaling).

Alternatively, the first indication indicates that the cause for resuming the connection or establishing the connection is that the second device performs RNAU r-rna-Update.

Alternatively, the first indication indicates that the cause for resuming the connection or establishing the connection is performing a relay (relay) service.

In another possible implementation, the first indication may reuse an existing cause for resuming the connection or establishing the connection of the first device, or may introduce a new cause for resuming the connection or establishing the connection of the first device.

For example, the first indication indicates that the cause for resuming the connection or establishing the connection is that the first device initiates data (mo-data).

Alternatively, the first indication indicates that the cause for resuming the connection or establishing the connection is that the first device initiates signaling (mo-signaling).

Alternatively, the first indication indicates that the cause for resuming the connection or establishing the connection is that the first device initiates a voice (mo-VoiceCall), a video (mo-VideoCall), or an SMS message (mo-SMS).

Alternatively, the first indication indicates that the cause for resuming the connection or establishing the connection is mt-Access for the first device .

Alternatively, the first indication indicates that the cause for resuming the connection or establishing the connection is that the first device performs RNAU rna-Update and the first device keeps in the RRC connected state.

In a possible implementation, the first indication may be determined by an RRC layer of the first device, or may be determined by a non-access stratum (non-access stratum, NAS) of the first device and indicated to the RRC layer.

For example, the first indication is sent by the NAS of the first device to the RRC layer of the first device when the first device determines that the second device needs to send signaling or data.

For example, the first indication is determined by the RRC layer of the first device when the first device determines that the second device needs to send signaling or data.

For example, a channel for sending the first message is determined by the RRC layer of the first device when the first device determines that the second device needs to send signaling or data.

In a possible implementation, the first message further includes assistance information, and the assistance information indicates that the first device needs to update an RNA for at least one second device. Even if the second device needs to update the RNA, after the first device requests to resume the connection to the network device, the first device may not enter the connected state. In this case, the network device may configure an uplink grant resource of the first device, so that the first device transmits auxiliary information of the second device. This implements the RNAU of the second device. Further, the auxiliary information may further notify the network device whether there is a second device that subsequently needs to update an RNA, so that the network device properly allocates, to the first device, an uplink grant resource used to transmit the auxiliary information of the second device. This improves a success rate of updating the RNA by the second device.

In a possible implementation, there are a plurality of implementations in which the auxiliary information indicates that the first device needs to update the RNA for the at least one second device. A specific manner is not limited in this embodiment of this application, which is flexible.

For example, the assistance information includes a resume ID of the second device and the first indication, and may directly send a resume request message of the second device to the network device, to perform the RNA update for the second device more quickly.

For example, the assistance information includes a resume ID of the second device and the first indication, and the assistance information further indicates that the first device further needs to subsequently update an RNA for at least one second device. For example, in addition to the resume ID of the second device and the first indication, the assistance information may further include a fourth indication. The fourth indication may occupy one bit, and indicates whether an RNA update request needs to be sent to another second device subsequently. Alternatively, the fourth indication may occupy a plurality of bits, and indicates a quantity of second devices that need to perform RNAU subsequently.

For example, the auxiliary information indicates that the first device further needs to update an RNA for at least one second device subsequently. The assistance information is used as an indication, and may occupy a small quantity of bits for indication, so that overheads of the first message can be reduced.

In a possible implementation, the method further includes:
The first device receives an RRC release message from the network device, where the RRC release message indicates the first device and the second device to enter an RRC inactive state. After the network device determines that the second device completes updating the RNA, the network device may indicate the first device and the second device to enter the RRC inactive state, to reduce power consumption of the first device and the second device.

In a possible implementation, the RRC release message includes release configuration information of the second device and identification information of the second device. The RRC release message sent by the network device to the first device may include an RRC release message of the second device. The first device receives the RRC release message, does not parse the RRC release message of the second device, and may directly forward the RRC release message of the second device to the second device. Alternatively, the RRC release message sent by the network device to the first device may include release configuration information of the second device and identification information of the second device. The first device may send the release configuration information of the second device to the corresponding second device based on the identification information of the second device.

In a possible implementation, the identification information of the second device has a plurality of implementations, for example, includes one or more pieces of the following information:
a resume ID of the second device, an inactive radio network temporary identifier (inactive radio network temporary identifier, I-RNTI) of the second device, a 5G-serving-temporary mobile subscriber identity (5G-serving-temporary mobile subscription identifier, 5G-S-TMSI) of the second device, a 5G-globally unique temporary identifier (5G-globally unique temporary identity, 5G-GUTI) of the second device, and the like.

In a possible implementation, the method further includes:
The first device sends the RRC release message to the second device, where the RRC release message includes release configuration information of the second device. If the RRC release message sent by the network device to the first device carries the release configuration information of the second device, the first device may forward the release configuration information of the second device to the second device, so that the second device is in an idle state or an inactive state, to reduce energy consumption of the second device.

According to a second aspect, a second communication method is provided. The method may be performed by a second communication apparatus. The second communication apparatus may be a communication device or a communication apparatus, for example, a chip system, that can support the communication device in implementing a function required in the method. An example in which the communication device is a network device is used below for description. The method includes:
The network device receives a first message from a first device, and determines, based on the first message, that the first device establishes or resumes a connection due to a service of a second device. The first message is used to establish or resume the connection to the network device, the first message further indicates a cause for the first device to establish or resume the connection; and the second device is a terminal device that connects to the network device by using the first device. The network device may determine, based on the first message, that the first device establishes or resumes the connection due to the service of the second device, to determine to keep the first device in a connected state, to reduce a quantity of times that the first device enters the connected state due to the service of the second device, and avoid unnecessary signaling waste.

In a possible implementation, the network device determines, based on the first message, that the cause for the first device to establish or resume the connection is that the second device performs RNAU, and the network device indicates the first device to keep in a radio resource control (RRC) connected state or an RRC inactive state. Alternatively, the network device determines, based on the first message, that the cause for the first device to establish or resume the connection is that the first device performs RNAU. There are a plurality of determining manners in which the network device determines, based on the first message, that the first device establishes or resumes the connection due to the service of the second device. For example, in a determining manner, the first message indicates that the second device performs RNAU. This is direct and clear. In another determining manner, the first message indicates that the first device performs RNAU. Although it is the first device that performs the RNAU, considering that that the first device helps the second device listen to paging is related to RNA, after the first device performs the RNAU, the second device may subsequently perform RNAU.

In a possible implementation, the first message includes a first indication, and the first indication indicates the cause for the first device to establish or resume the connection.

Alternatively, the first message includes a first indication and a second indication, the first indication indicates the cause for the first device to establish or resume the connection, and the second indication indicates whether the first device establishes or resumes the connection for the second device.

Alternatively, the first message is sent over a first CCCH, and indicates that the first device establishes or resumes the connection for the second device, the first message includes a first indication, and the first indication indicates the cause for the first device to establish or resume the connection.

Alternatively, the first message is sent by using a resource included in a random access response message received by the first device, the first message includes a first indication, the first indication indicates the cause for the first device to establish or resume the connection, and before the first message is sent, a random preamble sent by the first device to the network device indicates that the first device performs random access for the second device.

Alternatively, the first message is sent over a first CCCH, and indicates that the first device establishes or resumes the connection for the second device.

Alternatively, the first message is sent by using a resource included in a random access response message received by the first device, and before the first message is sent, a random preamble sent by the first device to the network device indicates that the first device performs random access for the second device.

In a possible implementation, the first indication indicates that the first device expects to keep in the RRC connected state.

Alternatively, the first indication indicates that the cause for resuming the connection or establishing the connection is that the second device initiates data (ro-data).

Alternatively, the first indication indicates that the cause for resuming the connection or establishing the connection is that the second device initiates signaling (ro-signaling).

Alternatively, the first indication indicates that the cause for resuming or establishing the connection is that the second device initiates a voice (ro-VoiceCall), a video (ro-VideoCall), or an SMS message (ro-SMS).

Alternatively, the first indication indicates that the cause for resuming the connection or establishing the connection is rt-Access for the second device.

Alternatively, the first indication indicates that the cause for resuming the connection or establishing the connection is that the second device performs RNAU r-rna-Update.

Alternatively, the first indication indicates that the cause for resuming the connection or establishing the connection is performing a relay (relay) service.

In a possible implementation, the first indication indicates that the first device expects to keep in the RRC connected state, and the network device determines that the first device keeps in the RRC connected state.

In a possible implementation, the first message further includes assistance information, and the assistance information indicates that the first device needs to update an RNA for at least one second device.

In a possible implementation, the method further includes:
The network device sends an RRC release message to the first device, where the RRC release message indicates the first device and the second device to enter the RRC inactive state.

In a possible implementation, the RRC release message includes release configuration information of the second device and identification information of the second device.

In a possible implementation, the method further includes:
The network device configures an uplink grant resource for the first device, where the uplink grant resource is used by the first device to send assistance information of the second device, and the assistance information is used to indicate that the first device needs to update an RNA for at least one second device. In this solution, the network device may configure, for the first device, the resource used to send the assistance information of the second device. In this way, the RNA of the second device can be updated without the first device entering the connected state.

For technical effects brought by the second aspect or the optional implementations of the second aspect, refer to the descriptions of the technical effects brought by the first aspect or corresponding implementations.

According to a third aspect, a third communication method is provided. The method may be performed by a third communication apparatus. The third communication apparatus may be a communication device or a communication apparatus, for example, a chip system, that can support the communication device in implementing a function required in the method. An example in which the communication device is a second device (remote UE) is used below for description. The method includes:

The second device sends a second message and a fourth message to a first device, where the second message indicates that the second device needs to update an RNA, and the fourth message carries a first paging parameter, and the first paging parameter is used by the first device to listen to paging from a network device for the second device. After updating the RNA, the second device may send, to the first device, the first paging parameter obtained after the RNA is updated. In this way, the first device can help, based on the correct paging parameter, the second device listen to the paging from the network device, to avoid missing paging.

In a possible implementation, the method further includes:
The second device receives a fifth message from at least one first device, where the fifth message indicates an RNA corresponding to the first device; and the second device selects some first device from the at least one first device based on an RNA of each first device. Each first device may broadcast the RNA of each first device, to prevent the second device from selecting a first device that is not located in a same RNA as the second device to provide a relay service, and ensure that the second device selects a first device that can provide a relay service for the second device.

In a possible implementation, the fourth message further carries a second paging parameter, and the second paging parameter is used to listen to paging from a core network device. After updating the RNA, the second device may send, to the first device, the second paging parameter obtained after the RNA is updated. In this way, the first device can help, based on the correct paging parameter, the second device listen to the paging from the core network device, to avoid missing paging. The fourth message may further indicate that the second device completes the RNAU, so that the first device can timely apply for releasing a connection to the network device, to help the first device reduce energy consumption.

For technical effects brought by the third aspect or the optional implementations of the third aspect, refer to the descriptions of the technical effects brought by the first aspect, the second aspect or corresponding implementations.

According to a fourth aspect, a fourth communication method is provided. The method may be performed by a first communication apparatus. The first communication apparatus may be a communication device or a communication apparatus, for example, a chip system, that can support the communication device in implementing a function required in the method. An example in which the communication device is a first device (relay UE) is used below for description. The method includes:

The first device receives a third message sent by a second device, and sends the first message to a network device, where the third message indicates that the second device establishes or resumes a connection to the network device, the first message is used by the first device to establish a connection to the network device, and the first message further indicates a cause for the first device to establish the connection, or the first message is used by the first device to resume a connection to the network device, and the first message further indicates a cause for the first device to resume the connection.

In this embodiment of this application, the first device may be triggered by the second device to request to establish or resume the connection to the network device, and the first device may fill in, based on an access cause of the second device, the cause for establishing or resuming the connection to the network device. In this way, the network device is assisted in properly configuring the first device, to avoid that the network device may perform incorrect processing because the network device cannot determine whether the access cause of the first device is for the first device or the second device.

In a possible implementation, there are a plurality of implementations for indicating, by the first message, the cause for the first device to resume the connection. For example, the following lists six indication manners:
In a first indication manner, the first message includes a first indication, and the first indication indicates the cause for the first device to establish or resume the connection.

In a second indication manner, the first message includes a first indication and a second indication, the first indication indicates the cause for the first device to establish or resume the connection, and the second indication indicates whether the first device establishes or resumes the connection for the second device.

In a third indication manner, the first message is sent over a first CCCH, and indicates that the first device establishes or resumes the connection for the second device.

In a fourth indication manner, the first message is sent over a first CCCH, and indicates that the first device establishes or resumes the connection for the second device. The first message includes a first indication, and the first indication indicates the cause for the first device to establish or resume the connection.

In a fifth indication manner, the first message is sent by using a resource included in a random access response message received by the first device, and before the first message is sent, a random preamble sent by the first device to the network device indicates that the first device performs random access for the second device.

In a sixth indication manner, the first message is sent by using a resource included in a random access response message received by the first device, the first message includes a first indication, the first indication indicates the cause for the first device to establish or resume the connection, and before the first message is sent, a random preamble sent by the first device to the network device indicates that the first device performs random access for the second device.

For technical effects of the foregoing indication manners, refer to technical effects of the indication manners in the first aspect.

In a possible implementation, the first indication may reuse an existing cause for resuming the connection or establishing the connection of the second device, or may introduce a new cause for resuming the connection or establishing the connection of the first device.

For example, the first indication indicates that the first device expects to keep in an RRC connected state.

Alternatively, the first indication indicates that the cause for resuming the connection or establishing the connection is that the second device initiates data (ro-data).

Alternatively, the first indication indicates that the cause for resuming the connection or establishing the connection is that the second device initiates signaling (ro-signaling).

Alternatively, the first indication indicates that the cause for resuming or establishing the connection is that the second device initiates a voice (ro-VoiceCall), a video (ro-VideoCall), or an SMS message (ro-SMS).

Alternatively, the first indication indicates that the cause for resuming the connection or establishing the connection is rt-Access for the second device.

Alternatively, the first indication indicates that the cause for resuming the connection or establishing the connection is that the second device performs RNAU r-rna-Update.

Alternatively, the first indication indicates that the cause for resuming the connection or establishing the connection is performing a relay (relay) service.

In a possible implementation, the first indication may reuse an existing cause for resuming the connection or establishing the connection of the second device, or may introduce a new cause for resuming the connection or establishing the connection of the first device.

For example, the first indication indicates that the cause for resuming the connection or establishing the connection is that the first device initiates data (mo-data).

Alternatively, the first indication indicates that the cause for resuming the connection or establishing the connection is that the first device initiates signaling (mo-signaling).

Alternatively, the first indication indicates that the cause for resuming the connection or establishing the connection is that the first device initiates a voice (mo-VoiceCall), a video (mo-VideoCall), or an SMS message (mo-SMS).

Alternatively, the first indication indicates that the cause for resuming the connection or establishing the connection is mt-Access for the first device .

Alternatively, the first indication indicates that the cause for resuming the connection or establishing the connection is that the first device performs RNAU rna-Update and the first device keeps in the RRC connected state.

In a possible implementation, the first indication may be determined by an RRC layer of the first device, or may be determined by a non-access stratum (non-access stratum, NAS) of the first device and indicated to the RRC layer.

For example, the first indication is sent by the NAS of the first device to the RRC layer of the first device when the first device determines that the second device needs to send signaling or data.

For example, the first indication is determined by the RRC layer of the first device when the first device determines that the second device needs to send signaling or data.

Alternatively, for example, a channel for sending the first message is determined by the RRC layer of the first device when the first device determines that the second device needs to send signaling or data.

According to a fifth aspect, a fifth communication method is provided. The method may be performed by a second communication apparatus. The second communication apparatus may be a communication device or a communication apparatus, for example, a chip system, that can support the communication device in implementing a function required in the method. An example in which the communication device is a network device is used below for description. The method includes:
The network device receives a first message from a first device, and determines, based on the first message, that the first device establishes or resumes a connection due to a service of a second device, where the first message is used by the first device to establish or resume the connection to the network device, the first message further indicates a cause for the first device to establish or resume the connection; and the second device is a terminal device that connects to the network device by using the first device. The network device may determine, based on the first message, that the first device establishes or resumes the connection due to the service of the second device, to determine to keep the first device in a connected state, to reduce a quantity of times that the first device enters the connected state due to the service of the second device, and avoid unnecessary signaling waste.

In a possible implementation, there are a plurality of implementations for indicating, by the first message, the cause for the first device to resume the connection. For example, the following lists six indication manners:
In a first indication manner, the first message includes a first indication, and the first indication indicates the cause for the first device to establish the connection or the cause for the first device to resume the connection.

In a second indication manner, the first message includes a first indication and a second indication, the first indication indicates the cause for the first device to establish or the cause for the first device to resume the connection, and the second indication indicates whether the first device establishes or resumes the connection for the second device.

In a third indication manner, the first message is sent over a first CCCH, and indicates that the first device establishes or resumes the connection for the second device.

In a fourth indication manner, the first message is sent over a first CCCH, and indicates that the first device establishes or resumes the connection for the second device. The first message includes a first indication, and the first indication indicates the cause for the first device to establish or resume the connection.

In a fifth indication manner, the first message is sent by using a resource included in a random access response message received by the first device, and before the first message is sent, a random preamble sent by the first device to the network device indicates that the first device performs random access for the second device.

In a sixth indication manner, the first message is sent by using a resource included in a random access response message received by the first device, the first message includes a first indication, the first indication indicates the cause for the first device to establish or resume the connection, and before the first message is sent, a random preamble sent by the first device to the network device indicates that the first device performs random access for the second device.

In a possible implementation, the first indication indicates that the first device expects to keep in the RRC connected state.

Alternatively, the first indication indicates that the cause for resuming the connection or establishing the connection is that the second device initiates data (ro-data).

Alternatively, the first indication indicates that the cause for resuming the connection or establishing the connection is that the second device initiates signaling (ro-signaling).

Alternatively, the first indication indicates that the cause for resuming or establishing the connection is that the second device initiates a voice (ro-VoiceCall), a video (ro-VideoCall), or an SMS message (ro-SMS).

Alternatively, the first indication indicates that the cause for resuming the connection or establishing the connection is rt-Access for the second device.

Alternatively, the first indication indicates that the cause for resuming the connection or establishing the connection is that the second device performs RNAU r-rna-Update.

Alternatively, the first indication indicates that the cause for resuming the connection or establishing the connection is performing a relay (relay) service.

In a possible implementation, the first indication indicates that the cause for resuming the connection or establishing the connection is that the first device initiates data (mo-data).

Alternatively, the first indication indicates that the cause for resuming the connection or establishing the connection is that the first device initiates signaling (mo-signaling).

Alternatively, the first indication indicates that the cause for resuming the connection or establishing the connection is that the first device initiates a voice (mo-VoiceCall), a video (mo-VideoCall), or an SMS message (mo-SMS).

Alternatively, the first indication indicates that the cause for resuming the connection or establishing the connection is mt-Access for the first device .

Alternatively, the first indication indicates that the cause for resuming the connection or establishing the connection is that the first device performs RNAU rna-Update and the first device keeps in the RRC connected state.

For technical effects brought by the fifth aspect or the optional implementations of the fifth aspect, refer to the descriptions of the technical effects brought by the fourth aspect or corresponding implementations.

According to a sixth aspect, a sixth communication method is provided. The method may be performed by a third communication apparatus. The third communication apparatus may be a communication device or a communication apparatus, for example, a chip system, that can support the communication device in implementing a function required in the method. An example in which the communication device is a second device (remote UE) is used below for description. The method includes:
A second device generates a third message, and sends the third message to a first device, where the third message indicates that the second device establishes or resumes a connection to a network device, and the third message further indicates a cause for the second device to establish or resume the connection. When the second device needs to establish or resume the connection to the network device, the second device may trigger the first device to establish the connection to the network device, and provide a relay service for the second device by using the first device. The third message may carry a cause for the second device to establish the connection or a cause for the second device to resume the connection, to assist the first device in filling in a cause for requesting to establish or resume the connection to the network device.

In a possible implementation, the third message includes a third indication.

The third indication indicates that the cause for resuming the connection or establishing the connection is that the second device initiates data (mo-data).

Alternatively, the third indication indicates that the cause for resuming the connection or establishing the connection is that the second device initiates signaling (mo-signaling).

Alternatively, the third indication indicates that the cause for resuming or establishing the connection is that the second device initiates a voice (mo-VoiceCall), a video (mo-VideoCall), or an SMS message (mo-SMS).

Alternatively, the third indication indicates that the cause for resuming the connection or establishing the connection is that the second device is paged for access (mt-Access).

Alternatively, the third indication indicates that the cause for resuming the connection or establishing the connection is that the second device performs RNAU ma-Update.

For technical effects brought by the sixth aspect or the optional implementations of the sixth aspect, refer to the descriptions of the technical effects brought by the fourth aspect or corresponding implementations.

According to a seventh aspect, a communication apparatus is provided. For example, the communication apparatus is the first device in the first aspect or the fourth aspect. The communication apparatus has a function of implementing behavior in the method embodiment in the first aspect or the fourth aspect. The function may be implemented by hardware, or may be implemented by hardware executing corresponding software. The hardware or the software includes one or more modules corresponding to the foregoing function. In a possible implementation, the communication apparatus includes, for example, a transceiver module. The transceiver module may include a receiving module and a sending module that are coupled to each other, and may further include a processing module coupled to the receiving module and/or the sending module, these modules may perform corresponding functions in the method example in the first aspect or the fourth aspect. For details, refer to detailed descriptions in the method example.

For example, the communication apparatus has a function of implementing behavior in the embodiment of the first aspect. In a possible implementation, the processing module is configured to generate a first message, where the first message is used by the communication apparatus to resume a connection to a network device, and the first message further indicates a cause for the communication apparatus to resume the connection

The transceiver module is configured to send the first message to a network device, where sending of the first message is triggered by sending RNA update by a second device, or the connection resumed by the communication apparatus is used by the second device to update an RNA.

For example, the communication apparatus has a function of implementing behavior in the embodiment of the fourth aspect. In a possible implementation, the transceiver module is configured to receive a third message sent by a second device, where the third message indicates that the second device establishes or resumes a connection to a network device.

The transceiver module is further configured to send a first message to the network device, where the first message is used by the communication apparatus to establish or resume a connection to the network device, and the first message further indicates a cause for the communication apparatus to establish or resume the connection.

In an optional implementation, the first message includes a first indication, and the first indication indicates the cause for the communication apparatus to resume the connection.

Alternatively, the first message includes a first indication and a second indication, the first indication indicates the cause for the communication apparatus to resume the connection, and the second indication indicates whether the communication apparatus resumes the connection for the second device.

Alternatively, the first message is sent over a first CCCH, and indicates that the communication apparatus establishes or resumes the connection for the second device, the first message includes a first indication, and the first indication indicates the cause for the communication apparatus to establish or resume the connection.

Alternatively, the first message is sent by using a resource included in a random access response message received by the communication apparatus, the first message includes a first indication, and the first indication indicates the cause for the communication apparatus to resume the connection, and before the first message is sent, a random preamble sent by the communication apparatus to the network device indicates that the communication apparatus performs random access for the second device.

Alternatively, the first message is sent over a first CCCH, and indicates that the communication apparatus establishes or resumes the connection for the second device.

Alternatively, the first message is sent by using a resource included in a random access response message received by the communication apparatus, and before the first message is sent, a random preamble sent by the communication apparatus to the network device indicates that the communication apparatus performs random access for the second device.

According to an eighth aspect, a communication apparatus is provided. For example, the communication apparatus is the network device in the second aspect or the fifth aspect. The communication apparatus has a function of implementing behavior in the method embodiment in the second aspect or the fifth aspect. The function may be implemented by hardware, or may be implemented by hardware executing corresponding software. The hardware or the software includes one or more modules corresponding to the foregoing function. In a possible implementation, the communication apparatus includes, for example, a transceiver module. The transceiver module may include a receiving module and a sending module that are coupled to each other, and may further include a processing module coupled to the receiving module and/or the sending module, these modules may perform corresponding functions in the method example in the second aspect or the fifth aspect. For details, refer to detailed descriptions in the method example.

For example, the communication apparatus has a function of implementing behavior in the embodiment of the second aspect or the fifth aspect. In a possible implementation, the transceiver module is configured to receive a first message from a first device, where the first message is used by the first device to establish or resume a connection to the communication apparatus, and the first message is further indicates a cause for the first device to establish or resume the connection.

The processing module is configured to determine, based on the first message, that the first device establishes or resumes the connection due to a service of a second device, where the second device is a terminal device that connects to the communication apparatus by using the first device.

In an optional implementation of the second aspect, the processing module is specifically configured to:
determine, based on the first message, that the cause for the first device to establish or resume the connection is that the second device performs RNAU, and the processing module indicates the first device to keep in an RRC connected state or an RRC inactive state; or
determine, based on the first message, that the cause for the first device to establish or resume the connection is that the first device performs RNAU.

In an optional implementation of the second aspect or the fifth aspect, the first message includes a first indication, and the first indication indicates the cause for the communication apparatus to resume the connection.

Alternatively, the first message includes a first indication and a second indication, the first indication indicates the cause for the communication apparatus to resume the connection, and the second indication indicates whether the communication apparatus resumes the connection for the second device.

Alternatively, the first message is sent over a first CCCH, and indicates that the communication apparatus establishes or resumes the connection for the second device, the first message includes a first indication, and the first indication indicates the cause for the communication apparatus to establish or resume the connection.

Alternatively, the first message is sent by using a resource included in a random access response message received by the communication apparatus, the first message includes a first indication, and the first indication indicates the cause for the communication apparatus to resume the connection, and before the first message is sent, a random preamble sent by the communication apparatus to the network device indicates that the communication apparatus performs random access for the second device.

Alternatively, the first message is sent over a first CCCH, and indicates that the communication apparatus establishes or resumes the connection for the second device.

Alternatively, the first message is sent by using a resource included in a random access response message received by the communication apparatus, and before the first message is sent, a random preamble sent by the communication apparatus to the network device indicates that the communication apparatus performs random access for the second device.

In an optional implementation of the second aspect or the fifth aspect, the first indication indicates that the first device expects to keep in an RRC connected state.

Alternatively, the first indication indicates that the cause for resuming the connection or establishing the connection is that the second device initiates data (ro-data).

Alternatively, the first indication indicates that the cause for resuming the connection or establishing the connection is that the second device initiates signaling (ro-signaling).

Alternatively, the first indication indicates that the cause for resuming or establishing the connection is that the second device initiates a voice (ro-VoiceCall), a video (ro-VideoCall), or an SMS message (ro-SMS).

Alternatively, the first indication indicates that the cause for resuming the connection or establishing the connection is that the second device is paged for access rt-Access.

Alternatively, the first indication indicates that the cause for resuming the connection or establishing the connection is that the second device performs a RNAU r-rna-Update.

Alternatively, the first indication indicates that the cause for resuming the connection or establishing the connection is performing a relay (relay) service.

In an optional implementation of the fifth aspect, the first indication indicates that the cause for resuming the connection or establishing the connection is that the first device initiates data (mo-data).

Alternatively, the first indication indicates that the cause for resuming the connection or establishing the connection is that the first device initiates signaling (mo-signaling).

Alternatively, the first indication indicates that the cause for resuming the connection or establishing the connection is that the first device initiates a voice (mo-VoiceCall), a video (mo-VideoCall), or an SMS message (mo-SMS).

Alternatively, the first indication indicates that the cause for resuming the connection or establishing the connection is mt-Access for the first device .

Alternatively, the first indication indicates that the cause for resuming the connection or establishing the connection is that the first device performs RNAU rna-Update and the first device keeps in the RRC connected state.

According to a ninth aspect, a communication apparatus is provided. For example, the communication apparatus is the second device in the third aspect or the sixth aspect. The communication apparatus has a function of implementing behavior in the method embodiment in the third aspect or the sixth aspect. The function may be implemented by hardware, or may be implemented by hardware executing corresponding software. The hardware or the software includes one or more modules corresponding to the foregoing function. In a possible implementation, the communication apparatus includes, for example, a transceiver module. The transceiver module may include a receiving module and a sending module that are coupled to each other, and may further include a processing module coupled to the receiving module and/or the sending module, these modules may perform corresponding functions in the method example in the third aspect or the sixth aspect. For details, refer to detailed descriptions in the method example.

For example, the communication apparatus has a function of implementing behavior in the embodiment of the third aspect. In a possible implementation, the transceiver module is configured to send a second message to a first device, where the second message indicates that the communication apparatus needs to update an RNA; and
the transceiver module is further configured to send a fourth message to the first device, where the fourth message carries a first paging parameter, and the first paging parameter is used by the first device to listen to paging from a network device for the second device.

In an optional implementation, the transceiver module is further configured to receive a fifth message from at least one first device, where the fifth message indicates an RNA corresponding to the first device.

The processing module is further configured to select the first device from the at least one first device based on the RNA of each first device.

For example, the communication apparatus has a function of implementing behavior in the embodiment of the sixth aspect. In a possible implementation, the processing module is configured to generate a third message, where the third message indicates the communication apparatus to establish or resume a connection to the network device, and the third message indicates a cause for the communication apparatus to establish or resume the connection.

The transceiver module is configured to send the third message to the first device.

In an optional implementation, the third message includes a third indication.

The third indication indicates that the cause for resuming the connection or establishing the connection is that the second device initiates data (mo-data).

Alternatively, the third indication indicates that the cause for resuming the connection or establishing the connection is that the second device initiates signaling (mo-signaling).

Alternatively, the third indication indicates that the cause for resuming or establishing the connection is that the second device initiates a voice (mo-VoiceCall), a video (mo-VideoCall), or an SMS message (mo-SMS).

Alternatively, the third indication indicates that the cause for resuming the connection or establishing the connection is that the second device is paged for access (mt-Access).

Alternatively, the third indication indicates that the cause for resuming the connection or establishing the connection is that the second device performs RNAU ma-Update.

According to a tenth aspect, a communication apparatus is provided. The communication apparatus may be the first device in the foregoing method embodiment or a chip disposed in the first device. Alternatively, the communication apparatus may be the network device in the foregoing method embodiment or a chip disposed in the network device. Alternatively, the communication apparatus may be the second device in the foregoing method embodiment or a chip disposed in the second device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus performs the method performed by a corresponding function entity in the foregoing method embodiment. For example, when the processor executes the computer program or the instructions, the communication apparatus performs the method performed by the first device in the foregoing method embodiment. For another example, when the processor executes the computer program or the instructions, the communication apparatus performs the method performed by the network device in the foregoing method embodiment. For example, when the processor executes the computer program or the instructions, the communication apparatus performs the method performed by the second device in the foregoing method embodiment.

The communication interface in the communication apparatus in the tenth aspect may be a transceiver in the communication apparatus, and is implemented, for example, by using an antenna, a feeder, and a codec in the communication apparatus. Alternatively, if the communication apparatus is a chip disposed in a communication apparatus, the communication interface may be an input/output interface of the chip, for example, an input/output pin.

According to an eleventh aspect, a communication system is provided. The communication system includes any communication apparatus according to the seventh aspect, any communication apparatus according to the eighth aspect, and any communication apparatus according to the ninth aspect.

According to a twelfth aspect, this application provides a chip system. The chip system includes a processor, configured to implement functions of the first device, the network device, or the second device in the methods in the foregoing aspects. In a possible design, the chip system further includes a memory, configured to store program instructions and/or data. The chip system may include a chip, or may include a chip and another discrete component.

According to a thirteenth aspect, a computer program product is provided. The computer program product includes computer program code. When the computer program code is run, the method performed by the first device, the network device, or the second device in the foregoing aspects is performed.

According to a fourteenth aspect, this application provides a computer-readable storage medium. The computer-readable storage medium stores a computer program. When the computer program is run, the method performed by the first device, the network device, or the second device in the foregoing aspects is performed.

### BRIEF DESCRIPTION OF DRAWINGS

FIG. 1 is a schematic diagram of a network architecture according to an embodiment of this application;
FIG. 2A and FIG. 2B are a schematic flowchart of updating a registered TA or RNA by relay UE and remote UE;
FIG. 3 is a schematic diagram of RNAs in which remote UE and relay UE are located after movement according to an embodiment of this application;
FIG. 4 is a schematic flowchart of a first communication method according to an embodiment of this application;
FIG. 5 is a schematic flowchart of a second communication method according to an embodiment of this application;
FIG. 6A and FIG. 6B are a schematic flowchart of a third communication method according to an embodiment of this application;
FIG. 7 is a schematic flowchart of a fourth communication method according to an embodiment of this application;
FIG. 8 is a schematic diagram of a structure of a communication apparatus according to an embodiment of this application; and
FIG. 9 is a schematic diagram of another structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

Before this application is described, some terms in embodiments of this application are first briefly explained and described, to help a person skilled in the art have a better understanding.
(1) A terminal device (also referred to as user equipment (user equipment, UE)) in embodiments of this application is a device having a wireless transceiver function. The terminal device may communicate with a core network by using a radio access network (radio access network, RAN), and exchange a voice and/or data with the RAN. The terminal device may be deployed on land, including an indoor or outdoor device, a handheld device, or a vehicle-mounted device; or may be deployed on water (for example, on a ship); or may be deployed in the air (for example, on an airplane, a balloon, or a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal device may include, for example, user equipment (user equipment, UE), a wireless terminal device, a mobile terminal device, a device-to-device communication (device-to-device communication, D2D) terminal device, a vehicle-to-everything (vehicle-to-everything, V2X) terminal device, a machine-to-machine/machine type communications (machine-to-machine/machine-type communications, M2M/MTC) terminal device, an internet of things (internet of things, loT) terminal device, a subscriber unit (subscriber unit), a subscriber station (subscriber station), a mobile station (mobile station), a remote station (remote station), an access point (access point, AP), a remote terminal (remote terminal), customer premises equipment (customer premises equipment, CPE), fixed wireless access (fixed wireless access, FWA), an access terminal (access terminal), a user terminal (user terminal), a user agent (user agent), or a user device (user device). For example, the terminal device may include a mobile phone (or referred to as a "cellular" phone), a computer with a mobile terminal device, or a portable, pocket-sized, handheld, or computer built-in mobile apparatus. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

However, if the various terminals described above are located on a vehicle (for example, placed in the vehicle or installed in the vehicle), the terminals may be considered as vehicle-mounted terminal devices. For example, the vehicle-mounted terminal devices are also referred to as on-board units (on-board unit, OBU).

In this embodiment of this application, all devices that can access the RAN may be considered as terminal devices, and the terminal devices may further include a relay (relay). It should be understood that one terminal device may perform data communication with a RAN device by using another terminal device. In this case, the another terminal device may be referred to as a relay or relay terminal device. Correspondingly, the terminal device may be referred to as a remote terminal device.

(2) A network device in embodiments of this application is an entity configured to transmit and/or receive a signal on a network side, for example, includes an access network (access network, AN) device, for example, a base station (for example, an access point), and may be a device that communicates with a wireless terminal device through one or more cells on an air interface in an access network, or for example, a network device in a vehicle-to-everything (vehicle-to-everything, V2X) technology is a roadside unit (road side unit, RSU). The RSU may be a fixed infrastructure entity supporting a V2X application, and may exchange a message with another entity supporting the V2X application. The base station is an apparatus that is deployed in a radio access network and that meets a 4G or 5G standard and that provides a wireless communication function for a terminal device. The base station may be configured to perform mutual conversion between a received over-the-air frame and a received IP packet, and serve as a router between the terminal device and a remaining part of the access network. The remaining part of the access network may include an IP network. The base station may further coordinate attribute management of the air interface. For example, the base station may include an evolved NodeB (NodeB, eNB, or e-NodeB, evolved NodeB) in an LTE system or long term evolution-advanced (long term evolution-advanced, LTE-A), may include a next generation NodeB (next generation NodeB, gNB) in a 5th generation mobile communication technology (the 5th generation, 5G) new radio (new radio, NR) system (also referred to as an NR system), or may include a centralized unit (centralized unit, CU) and a distributed unit (distributed unit, DU) in a cloud access network (cloud radio access network, Cloud RAN) system. This is not limited in this embodiment of this application. The access network device may alternatively be a new radio controller (new radio controller, NR controller), a gNodeB (gNB) in a 5G system, a centralized unit (centralized unit), a new radio base station, a radio remote module, a micro base station (also referred to as a small cell), a relay (relay), a distributed unit (distributed unit), a macro base station in various forms, a transmission reception point (transmission reception point, TRP), a transmission measurement function (transmission measurement function, TMF), a transmission point (transmission point, TP), any other radio access device, or a base station in next generation communication. However, embodiments of this application are not limited thereto. The network device may further include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP).

The network device may further include a core network device. For example, the core network device includes an access and mobility management function (access and mobility management function, AMF), a session management function (session management function, SMF), or a user plane function (user plane function, UPF) in a 5G system, or includes a mobility management entity (mobility management entity, MME) in a 4G system.

(3) Discontinuous reception (discontinuous reception, DRX) mechanism: The DRX mechanism includes a DRX cycle (cycle). A terminal device periodically "wakes up" for a period of time in the DRX cycle, and may keep in a "sleep" state in other time in the DRX cycle, to reduce power consumption. Simply speaking, in the DRX mechanism, the terminal device may periodically enter the sleep state, and does not need to listen to a physical downlink control channel (physical downlink control channel, PDCCH).

(4) Radio resource control (radio resource control, RRC) state: A terminal device has three RRC states: an RRC connected (connected) state, an RRC idle (idle) state, and an RRC inactive (inactive) state.

The RRC connected state may also be referred to as a connected state for short. In this specification, the "idle state" and the "RRC idle state" are a same concept, and may be interchanged. In the RRC connected state, an RRC connection is established between the terminal device and the network device. The network device may schedule the terminal device in the RRC connected state by using the connection to the terminal device, or may perform data transmission with the terminal device in the connected state. When the terminal device has no service, the terminal device may disconnect an RRC connection on an air interface under an indication of the network device, and enter the RRC idle state or the RRC inactive state.

The RRC idle state may also be referred to as an idle state for short. In this specification, the "idle state" and the "RRC idle state" are a same concept, and may be interchanged. In the RRC idle state, the terminal device does not establish an RRC connection to the network device, and the network side does not store a context of the terminal device, that is, the network side does not recognize the terminal device. If the terminal device needs to enter the RRC connected state from the RRC idle state, the terminal device needs to initiate an RRC connection establishment process. If the terminal device needs to find a terminal device for a service registered with the core network, the terminal device needs to be paged by using core network (core network, CN) paging (paging). To more effectively find a terminal device, the network device and the terminal device negotiate a time point, that is, a paging occasion (paging occasion, PO). The terminal device may listen on the PO, to determine whether a network device is searching for the terminal device. Similarly, if the network device needs to search for the terminal device, the terminal device may send paging at a time corresponding to the PO. An area where paging is sent is referred to as a tracking area (tracking area, TA). When the terminal device moves out of the TA, the terminal device needs to re-enter the RRC connected state, to notify the core network that the TA is updated. In this way, the network side can always know the TA in which the terminal device is located, and page (paging) the terminal device timely.

The RRC inactive state may also be referred to as an RRC deactivated state, or referred to as a deactivated state or an inactive state for short. In this specification, a "non-active state", the "deactivated state", the "inactive state", the "RRC inactive state", an "RRC deactivated state", and the like are a same concept, and may be interchanged. The terminal device previously enters the RRC connected state through an anchor base station. Then, the anchor base station releases the RRC connection, but the anchor base station stores the context (context) of the terminal device. If the terminal device needs to re-enter the RRC connected state from the RRC inactive state, the terminal device needs to initiate an RRC connection resume (resume) process (or referred to as an RRC connection reestablishment process) through a base station on which the terminal device currently camps. Because the terminal device may be in a moving state, the base station on which the terminal device currently camps and the anchor base station of the terminal device may be a same base station, or may be different base stations. When the terminal device enters the RRC inactive state, although the terminal device disconnects from an anchor base station, the terminal device maintains a path to the core network. Therefore, in comparison with an RRC establishment process, the terminal device can quickly perform connection resuming, a delay is short, and signaling overheads are low.

Similar to that the core network needs to find the terminal device, the anchor base station also needs to find the terminal device when data arrives at the core network. To find the terminal device, the anchor base station and the terminal device jointly determine a PO of the access network (RAN) paging, for example, determine the PO of the RAN paging based on parameters such as an I-RNTI, a 5G-S-TMSI and a RAN paging discontinuous reception (discontinuous reception, DRX) cycle (cycle). When data arrives at the core network, the terminal device first searches for the terminal device by using RAN paging. Area configuration of a paging terminal device is configured by the base station for the terminal device by using an RRC release message. When the terminal device moves out of the configured RNA, for example, the terminal device finds that RAN-AreaCode broadcast by the base station is not in the configured RNA, the terminal device needs to update the RNA. After obtaining the context of the terminal device, the base station may put the terminal device in the inactive state again, and deliver configuration of a suspend indication (suspend indication).

When the terminal device is in the inactive state, the terminal device may need to initiate a resume (resume) process. For example, after receiving RAN paging, the terminal device initiates a resume process. Alternatively, the terminal device periodically performs RNA update (update), and initiates a resume process. Alternatively, the terminal device determines an RNA based on broadcast information of a network, and initiates a resume process, to notify the network side of the determined RNA.

When initiating resume, the terminal device performs unified access control (unified access control, UAC) based on service initiation. For example, the terminal device carries a corresponding cause value (also referred to as a resume cause) in a resume request message. For example, the terminal device initiates resume due to RNA updating, and a resume cause carried in a resume request message may be rna-update, and is used to indicate to update an RNA. For another example, the terminal device initiates resume due to triggering of RAN-paging, and a resume cause carried in a resume request message may be mt-Access, and is used to indicate access initiated by the terminal device when the terminal device receives paging and needs to perform a corresponding service.

Because the terminal device may be in a moving state, the base station on which the terminal device currently camps and a base station that saves the context of the terminal device may be a same base station, or may be different base stations. When the terminal device in the RRC inactive state initiates RRC resume on a base station on which the terminal device currently camps, the base station on which the terminal device currently camps finds, based on a resume ID carried in the resume request message, a previous base station that serves the terminal device, and obtains the context of the terminal device from the base station. After obtaining the context of the terminal device, the currently camped base station may determine, based on the resume cause value carried in the resume request message sent by the terminal device, a state in which the terminal device is to be set. For example, if the resume cause value carried in the resume request message is ma-update, the currently camped base station may determine that the terminal device continues to be in the RRC inactive state.

(5) Terms "system" and "network" may be used interchangeably in embodiments of this application. The term "a plurality of" means two or more than two. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

At least one of the following items (pieces) or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c may be singular or plural.

In addition, unless otherwise stated, in embodiments of this application, ordinal numbers such as "first" and "second" are intended to distinguish between a plurality of objects, but are not intended to limit sizes, content, orders, time sequences, priorities, importance, or the like of the plurality of objects. For example, a first identifier and a second identifier may be a same identifier, or may be different identifiers. In addition, this name does not indicate that the two identifiers have different information amounts, content, priorities, importance, or the like.

The foregoing describes some terms in embodiments of this application. The following describes technical features in embodiments of this application.

In a currently proposed UE relay technology, there is a relay manner in which remote (remote) UE is visible to a RAN. In this relay manner, the remote UE can implement communication link switching.

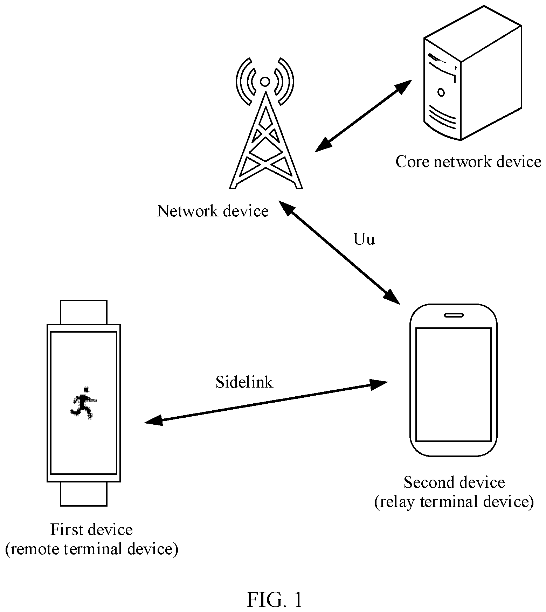

FIG. 1 is a schematic diagram of a network architecture of UE relay. FIG. 1 includes remote UE, relay UE, an access network device, and a core network device. It should be understood that quantities of the remote UE and the relay UE in FIG. 1 are only examples, and may be more or less. Any remote UE may select one of a plurality of relay UEs to provide a relay service for the remote UE. The remote UE may be glasses, a watch, or another wearable device, or may be a mobile phone. The relay UE may be a mobile phone, a customer premises equipment (customer premises equipment, CPE), a vehicle-mounted communication device, a road side unit, or the like. In FIG. 1, an example in which the remote UE is a smart watch and a mobile phone is used as the relay UE is used. An embedded subscriber identity module (eSIM) card may be installed on the smart watch, and the smart watch can directly communicate with a network device by using the eSIM card. A user goes outdoors for running with the smart watch instead of carrying the mobile phone. In this case, the smart watch may directly communicate with the network device through a Uu interface when the smart watch is outdoors. When the user goes home after running, the smart watch detects existence of the mobile phone by using a sidelink (sidelink, SL), and the smart watch may automatically switch from a direct link between the smart watch and the network device to an indirect link that performs relay by using the mobile phone. Alternatively, the smart watch may switch, based on an operation of the user, from a direct link between the smart watch and the network device to an indirect link that performs relay by using the mobile phone, to communicate with a network by using the mobile phone serving as the relay (relay) UE. It should be noted that there may be more relay UEs in the network, and the remote UE may select one of the plurality of relay UEs to provide a relay service for the remote UE, to reduce power consumption of some relay UEs.

In this relay manner, the remote UE can establish a connection to the access network device by using the relay UE, and enjoy a service provided by an access network, and power consumption of the remote UE can be reduced. For example, layer 2 (layer 2, L2) remote UE may be in an idle state or an inactive state. For remote UE in an idle state or an inactive state, the relay UE may help the remote UE perform paging listening, to reduce power consumption of the remote UE.

When the relay UE helps the remote UE to perform paging listening, the relay UE and the remote UE need to be in a same tracking area (tracking area, TA) or RNA, to ensure that the network device can find the remote UE. However, the remote UE and the relay UE that is selected by the remote UE to provide the relay service for the remote UE may not be in a same TA or RNA. Alternatively, due to mobility of the remote UE and the relay UE, the relay UE moves out of a TA or an RNA in which the remote UE is located. In this case, the network device cannot find the remote UE.

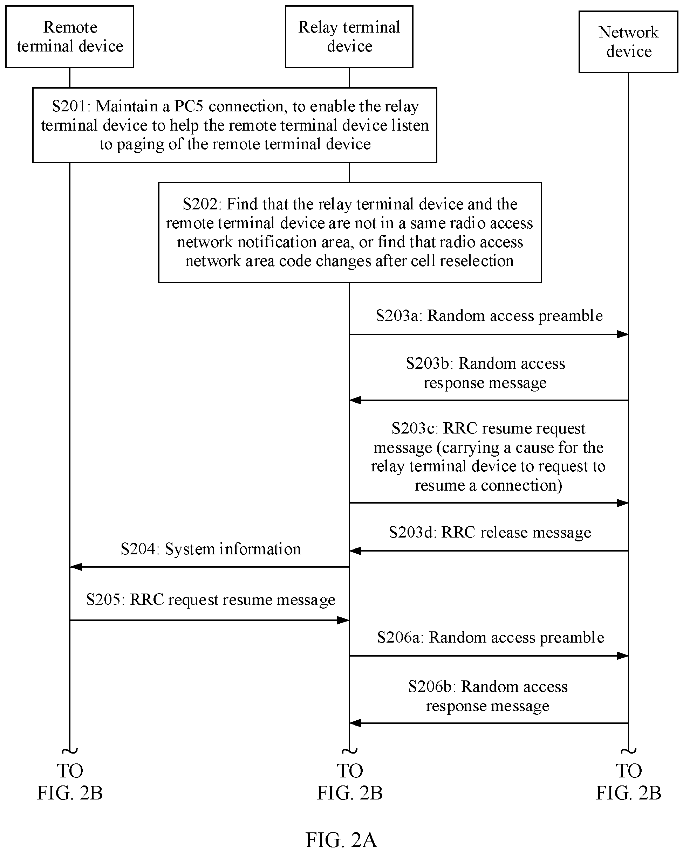

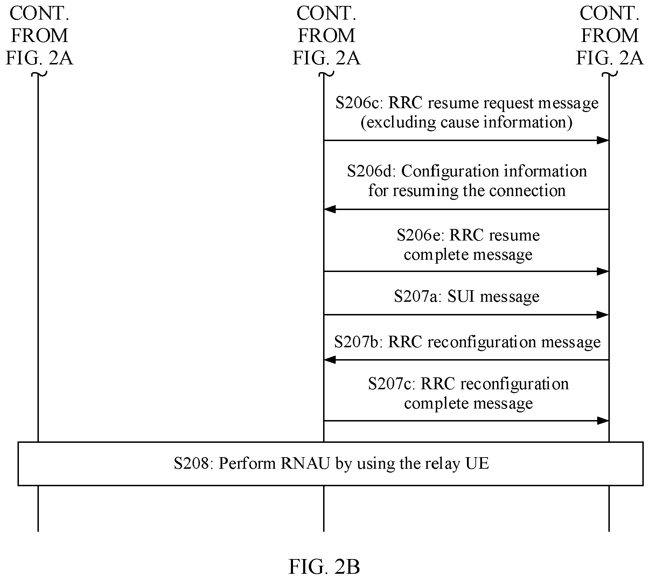

To enable the remote UE to be found by a network, after reselecting a cell, if the relay UE finds that the relay UE is located outside an area of a TA or an RNA with which the relay UE previously registers, the relay UE needs to notify the network device to update the TA or the RNA with which the relay UE registers. Similarly, if the remote UE also moves out of a corresponding area, the remote UE needs to update the TA or the RNA with which the relay UE registers, to enable the remote UE to be found by the network. For example, for a process in which the relay UE and the remote UE update the registered TA or RNA, refer to a procedure shown in FIG. 2A and FIG. 2B.

S201: Remote UE maintains a PC5 connection to relay UE, to enable the relay UE to help the remote UE listen to paging of the remote UE.

S202: The relay UE finds that the relay UE and the remote UE are in different RNAs, or the relay UE finds that radio access network area code (RAN-Areacode) changes after cell reselection.

Then, the relay UE performs a random access process, and performs RNA update (RNA update, RNAU) of the relay UE, for example, may perform S203a to S203d.

S203a: The relay UE sends a random access request message to a network device, where the random access request message carries a random access preamble (preamble) for random access.

S203b: The network device sends a random access response message to the relay UE.

S203c: The relay UE sends an RRC resume request (RRC resume request) message to the network device, where the RRC resume request message carries cause information for the relay UE to request to resume a connection, to indicate a cause for the relay UE to request to resume the connection. For example, the cause is that the relay UE needs to perform RNAU. The RRC resume request message may be Msg3 in a random access process.

S203d: The network device sends an RRC release (RRC release) message to the relay UE, to release a resource for the connection between the relay UE and the network device.

S204: The relay UE forwards system information (system information, SI) to the remote UE.

S205: The remote UE sends an RRC resume request message to the relay UE by using a signaling radio bearer (signal radio bearer, SRB) on a sidelink (sidelink, SL), so that the remote UE performs the RNAU. The SRB is, for example, an SRB0.

Then, the relay UE re-enters a connected state after being triggered by the remote UE, for example, performs S206a to S206e.

Specific implementation of S206a is the same as that of S203a, and specific implementation of S206b is the same as that of S203b. Details are not described herein again. A difference between S206c and S203c lies in that an RRC resume request message sent by the relay UE to the network device in S206c does not include cause information. S206d is different from S203d. In S206d, the network device sends, to the relay UE, configuration information used by the relay UE to resume the connection. The configuration information may be carried in Msg4 in a random access process, that is, the network device sends Msg4 to the relay UE, where Msg4 carries the configuration information used by the relay UE to resume the connection. In S206e, the relay UE sends an RRC resume complete (RRC resume complete) message to the network device. The RRC resume complete message may be Msg5 in the random access process.

Then, the relay UE configures a relay based on the network, for example, may perform S207a to S207c.

S207a: The relay UE sends a sidelink UE information (sidelink UE information, SUI) message to the network device, to request to establish a relay. The SUI message may carry an identifier of the remote UE, for example, include a C-RNTI of the remote UE. Optionally, the SUI message may be further used to request to configure a sidelink between the remote UE and the relay UE, to support the relay UE in providing a relay service for the remote UE.

S207b: The network device sends an RRC reconfiguration (RRC reconfiguration) message to the relay UE. The RRC reconfiguration message carries configuration information used by the relay UE to provide a relay service for the remote UE.

S207c: The relay UE sends an RRC reconfiguration complete (RRC reconfiguration complete) message to the network device.

After the relay UE completes configuration based on the configuration information carried in the RRC reconfiguration message, the relay UE may send the RRC reconfiguration complete message to the network device, to notify the network device that the relay UE completes configuration of providing the relay service for the remote UE.

S208: The remote UE performs the RNAU by using the relay UE.

After the relay UE establishes the connection to the network device, the remote UE may perform the RNAU by using the relay UE.

In the procedure shown in FIG. 2A and FIG. 2B, when the remote UE has the PC5 connection to the relay UE, and the relay UE performs the RNAU, the cause information that is carried in the current RRC resume request in S203c and that is used by the relay UE to request to resume the connection cannot enable the network device to determine a true intention of performing RRC resume by the relay UE. For example, the network device does not know whether the relay UE requests to resume the connection due to the remote UE. In this way, the network device configures the relay UE to repeatedly enter the connected state, and a process in which the relay UE repeatedly enters the connected state needs to involve a large amount of signaling interaction, and signaling overheads are high. For example, in a possible scenario, that is, the remote UE is in an RRC inactive state, the relay UE is in an RRC inactive state, the remote UE camps (camp) on a cell in which the relay UE is located, and when the relay UE moves, both the relay UE and the remote UE need to perform RNAU. In this scenario, the relay UE requests RRC resume because the remote UE needs the RNAU, but the network device considers that the relay UE requests RRC resume because the relay UE needs the RNAU, and the network device may enable the relay UE to enter the RRC inactive state. In this way, when the remote UE initiates the RNAU, the relay UE needs to re-enter the RRC connected state. Consequently, signaling overheads are high, and even signaling is wasted.

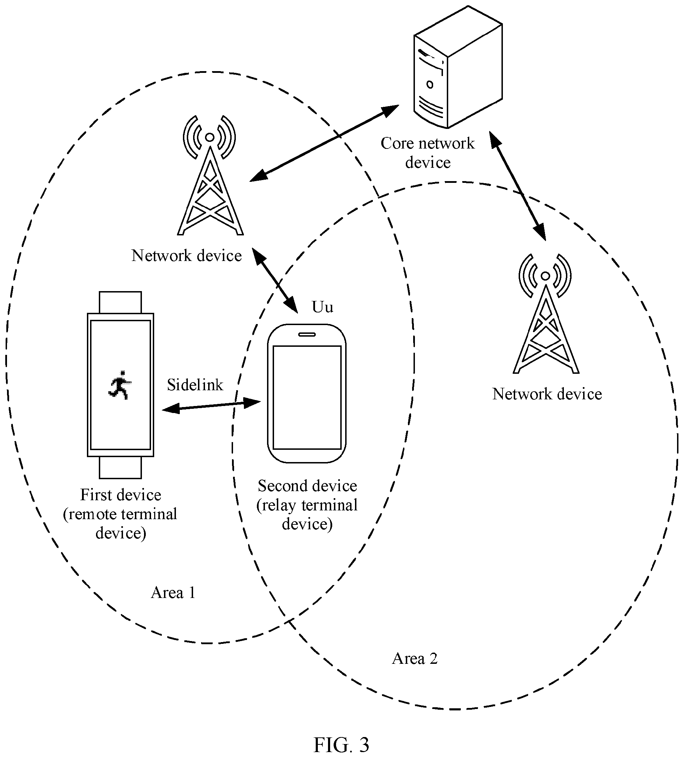

In addition, after the remote UE completes the RNAU, an inactive radio network temporary identifier (inactive RNTI, I-RNTI) used to identify the remote UE may change. Consequently, the relay UE does not have related information used to help the remote UE perform paging, and cannot help the remote UE listen to paging. In addition, both the remote UE and the relay UE perform the RNAU, but an updated RNA of the remote UE and an updated RNA of the relay UE may not be in a same area. For example, as shown in FIG. 3, before the RNAU, both the remote UE and the relay UE are located in an area 1. However, after the RNAU, the remote UE may be located in the area 1, and the relay UE may be located in an area 2. In this case, the remote UE does not know an updated RNA of the relay UE. Consequently, the remote UE cannot select relay UE whose RNA is the same as the updated RNA of the remote UE, and naturally cannot enable the relay UE to help listen to paging.

In view of this, an embodiment of this application provides a technical solution. In this solution, relay UE may notify a network device whether a cause for the relay UE to establish or resume a connection is for the relay UE or remote UE, so that the network device may enable the relay UE to be selectively in an RRC connected state or an RRC inactive state based on the true cause for the relay UE to establish or resume the connection. For example, if the true cause for the relay UE to establish or resume the connection is due to the remote UE, the network device may enable the relay UE to be in the RRC connected state. This can reduce a quantity of times that the relay UE enters the RRC connected state because the remote UE needs the relay UE to provide a relay service for the remote UE, thereby reducing signaling overheads.

The technical solution provided in this embodiment of this application may be applied to a 4th generation (the 4th generation, 4G) mobile communication technology system, for example, a long term evolution (long term evolution, LTE) system, or may be applied to a 5G system, for example, a new radio (new radio, NR) system, or may be applied to a next generation mobile communication system or another similar communication system. This is not specifically limited. In addition, the technical solution provided in this embodiment of this application may be applied to a cellular link, a PLMN network, a machine to machine (machine to machine, M2M) network, an internet of things (internet of things, loT) network, or another network, or may be applied to a link between devices, for example, a device-to-device (device to device, D2D) link, or may be applied to a V2X scenario, for example, an NR-V2X scenario, for example, may be applied to an internet of vehicles, for example, V2X, vehicle-to-vehicle (vehicle-to-vehicle, V2V), or may be applied to a field such as intelligent driving, assisted driving, or intelligent connected vehicles. A D2D link may also be referred to as a sidelink, where the sidelink may also be referred to as a side link, a secondary link, or the like. In embodiments of this application, the foregoing terms all refer to links established between devices of a same type, and have a same meaning. Links of a same type may be a link between a terminal device and a terminal device, a link between a base station and a base station, a link between a relay node and a relay node, or the like. This is not limited in this embodiment of this application. For the link between a terminal device and a terminal device, there is a D2D link defined in the third generation partnership project (third generation partnership project, 3GPP) Release (Rel)-12/13, and there is also a V2X link, defined by 3GPP for internet of vehicles, from a vehicle to a vehicle, a vehicle to a mobile phone, or a vehicle to any entity. The V2X link includes Rel-14/15, and further includes, for example, a V2X link based on an NR system in Rel-16 and subsequent releases which are currently being researched by 3 GPP.

The technical solution provided in this embodiment of this application is described below in detail with reference to the accompanying drawing. In the following descriptions, an example in which this embodiment of this application is applied to the network architecture shown in FIG. 1 is used. A first device in the following is a relay terminal device in FIG. 1, that is, the relay UE, and a second device is a remote terminal device in FIG. 1, that is, the remote UE.

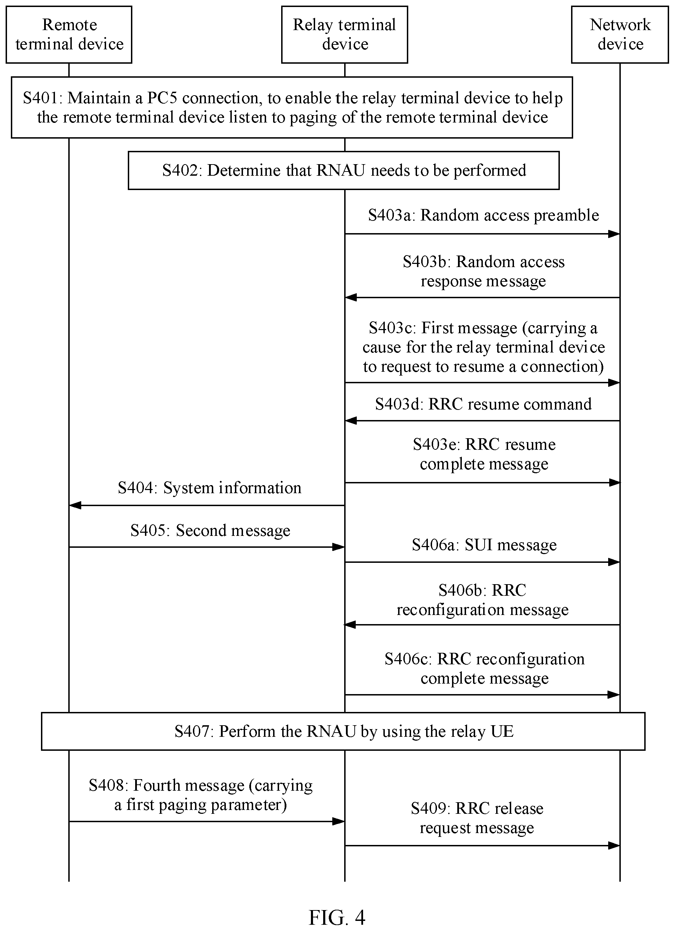

FIG. 4 is a schematic flowchart of a first communication method according to an embodiment of this application. According to a procedure shown in FIG. 4, a network device may enable relay UE to be selectively in an RRC connected state or an RRC inactive state based on a true cause for the relay UE to establish or resume a connection, to reduce a quantity of times that the relay UE repeatedly enters a connected state, and reduce signaling overheads. The specific procedure is described as follows:
S401: Remote UE maintains a PC5 connection to the relay UE, to enable the relay UE to help the remote UE listen to paging of the remote UE.

S402: The relay UE determines that RNAU needs to be performed.

That the relay UE determines that RNAU needs to be performed may include two aspects. In one aspect, the relay UE determines that the relay UE needs RNAU. For example, after cell reselection, the relay UE finds that RAN-Areacode (RANAC) of a cell on which the relay UE currently camps changes, and does not belong to an RNA configured for the relay UE. In this case, the relay UE may determine that RNAU is required. Because the relay UE needs to perform the RNAU, the remote UE may also need to perform RNAU. The relay UE needs to initiate a connection resume process to the network device based on a requirement of the remote UE for performing the RNAU. Subsequently, the remote UE still needs to initiate connection resume to the network device through a connection of the relay UE, to perform an RNAU of the remote UE. Therefore, the relay UE determines that the remote UE needs the RNAU, and requests the network device to resume the connection. It may also be considered that the relay UE requests the network device to resume the connection for the remote UE to update the RNA.

In the other aspect, the relay UE determines that the remote UE needs RNAU. For example, the remote UE requests to perform the RNAU by using the relay UE. It should be understood that when the remote UE and the relay UE are in a same RNA, the relay UE may help the remote UE listen to paging of the remote UE. When the remote UE finds that an RNA of the relay UE that provides a relay service for the remote UE is different from an RNA of the remote UE, the remote UE may request to perform the RNAU. That the remote UE requests to perform the RNAU by using the relay UE may include the following cases.

In a first case, the relay UE receives a second message from the remote UE, where the second message carries indication information, and the indication information indicates that the remote UE needs to update an RNA. In this case, the relay UE may determine, based on the indication information, that the remote UE needs the RNAU.

In a second case, the relay UE receives a second message from the remote UE, where the second message includes RAN-Areacode included in an RNA of the remote UE. After obtaining the RAN-Areacode included in the RNA of the remote UE, the relay UE finds that the RAN-Areacode of the cell on which the relay UE currently camps does not belong to the RNA indicated by the RAN-Areacode included in the second message. In this case, the relay UE may determine that the remote UE needs the RNAU.

In a third case, the relay UE receives a second message from the remote UE, where the second message includes RAN-Areacode of a cell on which the remote UE currently camps. After obtaining the RAN-Areacode in the second message, the relay UE finds that the RAN-Areacode of the cell on which the relay UE currently camps does not belong to the RNA indicated by the RAN-Areacode included in the second message. In this case, the relay UE may determine that the remote UE needs the RNAU.

In a fourth case, the relay UE receives a second message from the remote UE, where the second message includes an RRC resume request of the remote UE. For specific content, refer to S405. The relay UE may determine, by receiving the RRC resume request of the remote UE and based on resume cause carried in the message, that the remote UE needs the RNAU.

After determining that the remote UE needs the RNAU, the relay UE may request the network device to resume the connection. For example, the relay UE initiates a random access process to the network device. The relay UE determines that the remote UE needs the RNAU, and requests the network device to resume the connection. It may also be considered that that the relay UE requests the network device to resume the connection is triggered by sending the second message by the remote UE.

S403a: The relay UE sends a random access preamble (preamble) to the network device, and correspondingly, the network device receives the preamble from the relay UE. The network device is a network device on which the relay UE camps.

The preamble may be a common preamble, or the preamble may be a dedicated preamble. For example, the network device may configure a preamble that is specially used for relay access of the relay UE. If the preamble is a dedicated preamble, the preamble may indicate a cause for the relay UE to request to resume the connection. For example, the relay UE requests to resume the connection due to the remote UE. For another example, the relay UE requests to resume the connection because the remote UE performs RNAU. For another example, the relay UE resumes the connection because the remote UE is paged by a network. For another example, the relay UE requests to resume the connection because the remote UE initiates a data service or a voice service. Whether the preamble is a common preamble or a dedicated preamble may cause a subsequent procedure to be different. This is separately described in a subsequent embodiment.

S403b: The network device sends a random access response (random access response, RAR) message to the relay UE, and correspondingly, the relay UE receives the RAR message from the network device.

S403c: The relay UE sends a first message to the network device, and correspondingly, the network device receives the first message from the relay UE, where the first message is used to resume a connection between the relay UE and the network device, and the first message further indicates a cause for the relay UE to resume the connection.

The first message may alternatively be an RRC resume request message, for example, may be Msg3 in a random access process. The first message may indicate a cause for the relay UE to resume the connection. For example, the cause is that the relay UE resumes the connection for a service of the relay UE, or the cause is that the relay UE resumes the connection for the remote UE.

If the cause is that the service of the relay UE resumes the connection, the cause may reuse a resume cause (a resume cause of an RRC resume request) for the relay UE to request to resume the connection. For example, the cause may be that the relay UE initiates data (mo-data). Alternatively, the cause may be that the relay UE initiates signaling (mo-signaling). Alternatively, the cause may be that the relay UE initiates a voice (mo-VoiceCall), a video (mo-VideoCall), or an SMS message (mo-SMS). Alternatively, the cause may be that the relay UE is paged for access (mt-Access). Certainly, a new cause may alternatively be introduced. For example, the cause may be that the relay UE performs RNAU rna-Update and the relay UE keeps in the RRC connected state.

If the cause is that the relay UE resumes the connection for the remote UE, the cause may reuse a resume cause (a resume cause of an RRC resume request) for the relay UE to request to resume the connection. For example, the cause is that the remote UE initiates signaling (ro-signaling). Alternatively, the cause is that the remote UE performs RNAU r-rna-Update. Alternatively, the cause is that the relay UE performs a relay (relay) service. Certainly, a new cause may alternatively be introduced. For example, the cause is that the remote UE performs RNAU (remote-ma-Update). Alternatively, the cause is that the relay UE expects to keep in the RRC connected state.

The foregoing lists possible causes for the relay UE to resume the connection. There may be a plurality of manners in which the first message indicates the foregoing listed causes for the relay UE to resume the connection. The following uses examples for description.

In a first indication manner, the first message includes a first indication (or first cause indication information), and the first indication indicates a cause for the relay UE to resume the connection.

The relay UE can indicate, by using the first indication, the cause for the relay UE to resume the connection, for example, mo-data, mo-signaling, or mo-VoiceCall. After receiving the first message from the relay UE, the network device can determine, by obtaining the first indication, the cause for the relay UE to resume the connection. For example, the first indication indicates that the cause for the relay UE to resume the connection is that the relay UE performs RNAU ma-update and the relay UE keeps in the RRC connected state. The network device receives the first message, so that the relay UE can keep in the RRC connected state.

For example, the first message is an RRC resume request message, and the first indication may include a field that is added to the RRC resume request message. For another example, the first message is an RRC resume request message, and the first indication may include an existing field in the RRC resume request message. For example, a field that is in the RRC resume request message and that indicates a resume cause is used to carry the first indication, for example, a cause value of spare is used for indication. To indicate more causes, a quantity of bits occupied by the field that is in the RRC resume request message and that indicates a resume cause may alternatively be extended.

In a second indication manner, the first message includes a first indication and a second indication, the first indication indicates the cause for the relay UE to resume the connection, and the second indication indicates whether the relay UE resumes the connection for the remote UE.

A difference from the first indication manner lies in that the relay UE indicates, by using the first indication and the second indication, the cause for the relay UE to resume the connection. In this manner, two levels of causes may be indicated by using the first indication and the second indication. For example, the first indication may indicate that the cause for the relay UE to resume the connection is a service cause, and the second indication may indicate whether the cause for the relay UE to resume the connection is for the relay UE or the remote UE. For example, the cause that is indicated by the first indication and that is for the relay UE to resume the connection may be compatible with an existing cause for the relay UE to resume the connection or an existing cause for the relay UE to resume the connection. The second indication may indicate whether the cause for the relay UE to resume the connection is for the relay UE or the remote UE. After receiving the first message from the relay UE, the network device may determine, based on the second indication, whether the cause for the relay UE to resume the connection is for the remote UE, and then determine, based on the second indication, a status in which the relay UE is to be. For example, if the second indication indicates that the cause for the relay UE to resume the connection is for the remote UE, the network device may keep the relay UE in the RRC connected state. In addition, the network device may configure, for the relay UE based on the first indication, related information for a service that the remote UE needs to perform, so that the relay UE provides a relay service for the remote UE.

For example, the first message is an RRC resume request, the first indication may be included in a field added to the RRC resume request, and the second indication may be included in another field added to the RRC resume request. Alternatively, the first indication and the second indication may be included in a field added to the RRC resume request. For another example, the first message is an RRC resume request, the first indication may be included in an existing field in the RRC resume request, and the second indication may be included in a field added to the RRC resume request. For example, the RRC resume request is used to carry the first indication by using a field used to indicate a resume cause. To indicate more causes, a quantity of bits occupied by a field that is in the RRC resume request message and that indicates a resume cause may be extended. For another example, the first indication and the second indication may be included an existing field in the RRC resume request. For example, an indication bit is added to the existing field in the RRC resume request, and the indication bit may carry the second indication.

In a third indication manner, the first message is sent over a first common control channel, and indicates that the relay UE resumes the connection for the remote UE.

Different from the foregoing two indication manners, in this indication manner, the first CCCH for sending the first message may indicate the relay UE to resume the connection for the remote UE. The first CCCH is a specific logical channel, and is different from a logical channel for sending an RRC resume request message in the conventional technology (currently, the RRC resume request message is sent by using SRB0). The first CCCH may be agreed on by the network device and the relay UE or predefined. For example, a logical channel identifier corresponding to the first CCCH is 5. In other words, the relay UE sends Msg3 over another CCCH, where Msg3 includes the RRC resume request message. The network device may determine, based on the CCCH for sending the first message, the cause for the relay UE to resume the connection. In other words, an information element may be added to the resume request message to indicate the cause for the relay UE to resume the connection, to avoid a case in which the relay UE cannot be indicated to resume the connection for the remote UE due to a limited size of Msg3.

Content carried in the RRC resume request message varies based on different causes for the relay UE to resume the connection. The following uses an example for description.

Example 1: If the relay UE assists the remote UE in performing the RNAU, the RRC resume request message further includes a resume ID and a cause of the remote UE. The network device may determine, based on information indicating that the RRC resume request message is sent over the first CCCH, and the resume ID and the resume cause included in the RRC resume request message, that the cause for the relay UE to resume the connection is for the remote UE, and may directly obtain a resume message of the remote UE over the first CCCH.

Example 2: If the relay UE also needs to perform the RNAU, the RRC resume request message further includes a resume ID and a cause (cause) of the relay UE. The network device may determine, based on information indicating that the RRC resume request message is sent over the first CCCH, and the resume ID and the cause included in the RRC resume request message, that the cause for the relay UE to resume the connection is that the relay UE further needs to send a resume request to the remote UE subsequently.

Example 3: Based on Example 2, the sent RRC resume request message or Msg3 that carries the RRC resume request message may further include assistance information. The assistance information may indicate remote UE or remote UEs for which the relay UE further needs to provide a relay service subsequently, that is, indicate remote UE or remote UEs that further need to update an RNA.

For example, the assistance information is used as indication information, and may indicate that the relay UE further needs to update an RNA for the remote UE subsequently. The assistance information is used as an indication, and may occupy a small quantity of bits for indication, so that overheads of the first message can be reduced.

For another example, the assistance information includes a resume ID of one or more remote UEs and a first indication, that is, implicitly indicates that the relay UE further needs to subsequently provide a relay service for the one or more remote UEs, and the cause for the relay UE to resume the connection is a cause indicated by the first indication. In this way, a resume request message of a second device may be directly sent to the network device based on the resume ID, to update an RNA of the second device more quickly.

Certainly, the assistance information may be used as indication information, and explicitly indicates that the relay UE further needs to update the RNA for the remote UE subsequently. In addition, the assistance information may include a resume ID of one or more remote UEs and a first indication. For example, in addition to the resume ID of the second device and the first indication, the assistance information may further include a fourth indication. The fourth indication may occupy one bit, and indicates whether an RNA update request needs to be sent to another second device subsequently. Alternatively, the fourth indication may occupy a plurality of bits, and indicates a quantity of second devices that need to perform RNAU subsequently.

In a fourth indication manner, the first message is sent over the first CCCH, and indicates that the relay UE resumes the connection for the remote UE, the first message includes a first indication, and the first indication indicates the cause for the relay UE to resume the connection.

A difference from the foregoing third indication manner lies in that in the indication manner, in addition to indicating, over the CCCH for sending the first message, that the relay UE resumes the connection for the remote UE, the first indication further indicates the cause for the relay UE to resume the connection. An example in which the first message is an RRC resume request message carried by Msg3 is used. To be specific, the relay UE sends the RRC resume request message over the first CCCH. The RRC resume request message includes the first indication, that is, a resume cause. The network device may determine, based on the first CCCH for sending the RRC resume request message, and the first indication in Msg3, the cause for the relay UE to resume the connection.

In a fifth indication manner, the cause for the relay UE to resume the connection is indicated by using a resource for sending the first message.

For example, the network device may configure a preamble that is specially used by the relay UE for relay access. If the preamble sent by the relay UE to the network device is a dedicated preamble, that is, the preamble indicates that the relay UE performs random access for the remote UE, and the network device receives the dedicated preamble, the network device may configure a corresponding resource, and send a random access response message to the relay UE. The random access response message includes the resource that is configured by the network device for the relay UE and that is used for random access, that is, a resource used to send the first message. The relay UE receives the random access response message, and sends the first message by using the resource included in the random access response message. The network device may determine, based on the resource used to send the first message, the cause for the relay UE to resume the connection.

In a sixth indication manner, the cause for the relay UE to resume the connection is indicated by using a resource for sending the first message and a first indication included in the first message.

A difference from the foregoing fifth indication manner lies in that in the indication manner, the relay UE indicates, by using the resource for sending the first message, and with reference to the first indication included in the first message, the cause for the relay UE to resume the connection. The network device may determine, based on the resource for sending the first message, and with reference to the first indication, that the relay UE resumes the connection for the remote UE, and the relay UE resumes the connection due to a specific service of the remote UE.

When the relay UE determines that the remote UE needs to send signaling or data, the relay UE sends the first message to the network device. The first indication carried in the first message may be determined by a non-access stratum (non-access stratum, NAS) of the relay UE, or may be determined by an RRC layer of the relay UE. For example, when the relay UE determines that the remote UE needs to send signaling or data, a PC5 layer of the relay UE may notify the NAS of the relay UE, and the NAS of the relay UE may determine the first indication, and send the first indication to the RRC layer of the relay UE. Alternatively, when the relay UE determines that the remote UE needs to send signaling or data, the RRC layer of the relay UE determines the first indication.

If the relay UE indicates, over a first CCCH for sending the first message, the cause for the relay UE to resume the connection, when the relay UE determines that the remote UE needs to send signaling or data, the RRC layer of the relay UE determines the first CCCH for sending the first message.

S403d: The network device sends an RRC resume command to the relay UE, and correspondingly, the relay UE receives the RRC resume command from the network device.

After receiving the first message, the network device may determine, based on the first message, the cause for the relay UE to resume the connection, and enable the relay UE to enter a corresponding RRC state based on the cause. For example, if the cause for the relay UE to resume the connection is for the remote UE, or the cause for the relay UE to resume the connection is that the relay UE expects to keep in the RRC connected state, the network device may send an RRC resume command to the relay UE.

S403e: The relay UE sends an RRC resume complete (RRC resume complete) message to the network device, and correspondingly, the network device receives the RRC resume complete message from the relay UE.

The network device determines, based on the first message, to keep the relay UE in the RRC connected state. To be specific, after the relay UE sends the RRC resume request message to the network device, the network device may not send an RRC release message to the relay UE. The relay UE keeps in the RRC connected state. In this way, the remote UE initiates the RNAU, and the relay UE does not need to re-enter the RRC connected state. This reduces signaling overheads.

S404: The relay UE forwards SI to the remote UE, and correspondingly, the remote UE receives the SI from the relay UE. For details, refer to S204.

S405: The remote UE sends the second message, for example, the RRC resume request message, to the relay UE by using an SRB on an SL, and correspondingly, the relay UE receives the resume request message from the remote UE. The resume request message is used by the remote UE to perform the RNAU. For details, refer to S205.

S406a: The relay UE sends an SUI message to the network device, and correspondingly, the network device receives the SUI message from the relay UE. The SUI message is used to request to establish a relay.

The relay UE keeps in the RRC connected state after successful random access. When the remote UE initiates the RNAU, the relay UE may configure the relay for the network device, to provide the relay service for the remote UE. For example, the relay UE may configure, for the network device, related information that enables the remote UE to perform the RNAU by using the relay UE. For specific implementation, refer to related content of S207a. Because the network device may learn, by using the first message, that a cause for the relay UE to enter the connected state is providing the relay service, the network device may send relay configuration to the relay UE. Therefore, S406a is an optional step.

S406b: The network device sends an RRC reconfiguration message to the relay UE, and correspondingly, the relay UE receives the RRC reconfiguration message from the network device.

The network device may send the RRC reconfiguration message to the relay UE, and the RRC reconfiguration message may be used to configure the relay UE to provide the relay service for the remote UE. The RRC reconfiguration message includes, for example, configuration information of an air interface link between the relay UE and the network device, and may further include configuration information of a sidelink between the relay UE and the remote UE. For specific implementation, refer to related content of S207b.

S406c: The relay UE sends an RRC reconfiguration complete message to the network device, and correspondingly, the network device receives the RRC reconfiguration complete message from the relay UE. For specific implementation, refer to related content of S207c.

It should be noted that, in this embodiment of this application, a sequence of performing S403a to S403e, S404, and S405 is not limited, a sequence of performing S406a to S406c, S404, and S405 is not limited, and a sequence of performing S404 and S405 is not limited. In other words, S403a to S403e may be performed before S404 and S405, or S403a to S403e may be performed after S404 and S405. S406a to S406c may be performed before S404 and S405, or S406a to S406c may be performed after S404 and S405. S405 may be performed before S404, or S405 is performed after S404.

S407: The remote UE performs the RNAU by using the relay UE.

The remote UE sends an RRC resume request message to the network device by using the relay UE, so that the remote UE performs the RNAU. In other words, the relay UE forwards the RRC resume request received in S405 to the network device. The RRC resume request message carries a resume ID and a cause, and may indicate a previous network device (for ease of description, referred to as a previous network device) that serves the remote UE. The network device may obtain a context of the remote UE from the previous network device. The network device may determine, based on the cause carried in the RRC resume request message, whether to put the remote UE back to the RRC inactive state. For example, the cause indicates that the remote UE performs the RNAU, and the network device may put the remote UE back to the RRC inactive state by using the RRC release message. The RRC release message may carry an indication (indication) of suspend (suspend). For example, the RRC release message includes an identifier (ID) of the remote UE, for example, a 5G-S-TMSI of the remote UE, a resume (resume) ID or an inactive radio network temporary identifier (inactive RNTI, I-RNTI), or a short inactive radio network temporary identifier (short inactive RNTI, short-I-RNTI). The resume ID includes some bits of the I-RNTI.

Further, the network device may further notify the remote UE of some related information for listening to paging. For example, the RRC release message may further include a RAN paging cycle and RNA-related configuration information, for example, RANAC or cell ID-related information. The remote UE may listen to RAN paging based on the information notified by the network device.

S408: The remote UE sends a fourth message to the relay UE, and correspondingly, the relay UE receives the fourth message from the remote UE. The fourth message carries a first paging parameter.

After the remote UE updates the RNA, an I-RNTI or a 5G-S-TMSI used to identify the remote UE, or the RAN paging cycle may change. As a result, the relay UE does not have related information used to help the remote UE perform paging, and cannot help the remote UE listen to paging. For example, if there is no updated I-RNTI, the relay UE cannot identify whether RAN paging pages the remote UE. If there is no updated 5G-S-TMSI, the relay UE cannot correctly calculate a paging occasion (paging occasion, PO) of RAN paging. If the RAN paging cycle changes, the calculated PO is also incorrect. Therefore, in this embodiment of this application, the remote UE may update the I-RNTI or the 5G-S-TMSI of the remote UE, and may further update some parameters, for example, the RAN paging cycle, for listening to paging. Then, the remote UE may send the fourth message to the relay UE, where the fourth message may carry the first paging parameter, so that the relay UE listens to paging from the network device for the remote UE. For example, the first paging parameter may include an ID of the remote UE and the RAN paging cycle.

If the remote UE needs the relay UE to help listen to paging from a core network device, the fourth message may further carry a second paging parameter, and the second paging parameter may be used by the relay UE to listen to paging from the core network device for the remote UE.

The fourth message may further indicate that the second device completes the RNAU, so that the first device can timely apply for releasing a connection to the network device, to help the first device reduce energy consumption.

After the remote UE updates the RNA, an updated RNA of the remote UE and an updated RNA of the relay UE may not be in a same area. In this case, the relay UE does not know the updated RNA of the remote UE, and therefore does not determine whether the remote UE subsequently needs to perform an RANU. Therefore, the fourth message may further carry the updated RNA of the remote UE. The relay UE may determine, based on the updated RNA of the remote UE, whether the remote UE subsequently needs to perform the RANU. In other words, the relay UE may determine in advance a valid RNA of the remote UE based on the updated RNA of the remote UE, to determine that the remote UE subsequently needs to perform the RANU. If the relay UE determines that the remote UE subsequently needs to perform the RANU, the relay UE may enter the RRC connected state in advance, so that the relay UE does not need to re-enter the RRC connected state when the remote UE needs to perform the RANU and the relay UE is still in the RRC inactive state or an idle state. This shortens a delay of performing the RNAU by the remote UE.

S409: The relay UE determines that the remote UE completes the RNAU, and sends an RRC release request message to the network device, and correspondingly, the network device receives the RRC release request message from the relay UE.

The relay UE may determine, based on the fourth message, that the remote UE completes the RNAU, and may send assistance information to the network device, to request the relay UE and/or the remote UE to return to the RRC inactive state or the idle state, to reduce power consumption of the relay UE and/or the remote UE as much as possible.

According to the process in FIG. 4, the resume cause carried in the RRC resume request message sent by the relay UE to the network device may be the true cause for the relay UE to resume the connection. For the network device, the true cause for the relay UE to resume the connection may be determined based on the resume cause carried in the RRC resume request message, so that the relay UE is put in a proper state. For example, the cause is that the relay UE resumes the connection for the remote UE, and the network device may keep the relay UE in the RRC connected state. In this way, when the remote UE needs the relay UE to provide the relay service, a quantity of times for performing a random access process by the relay UE can be reduced. This reduces signaling overheads.

In addition, after updating the RNA, the remote UE may notify the relay UE of a paging parameter obtained after the RNA is updated, to avoid that the relay UE misses listening to paging of the remote UE. After updating the RNA, the remote UE may further notify the relay UE of the updated RNA. In this way, the relay UE may determine in advance whether the remote UE subsequently updates the RNA, so that the remote UE can enter the RRC connected state in advance. This shortens the delay of subsequently updating the RNA by the remote UE.

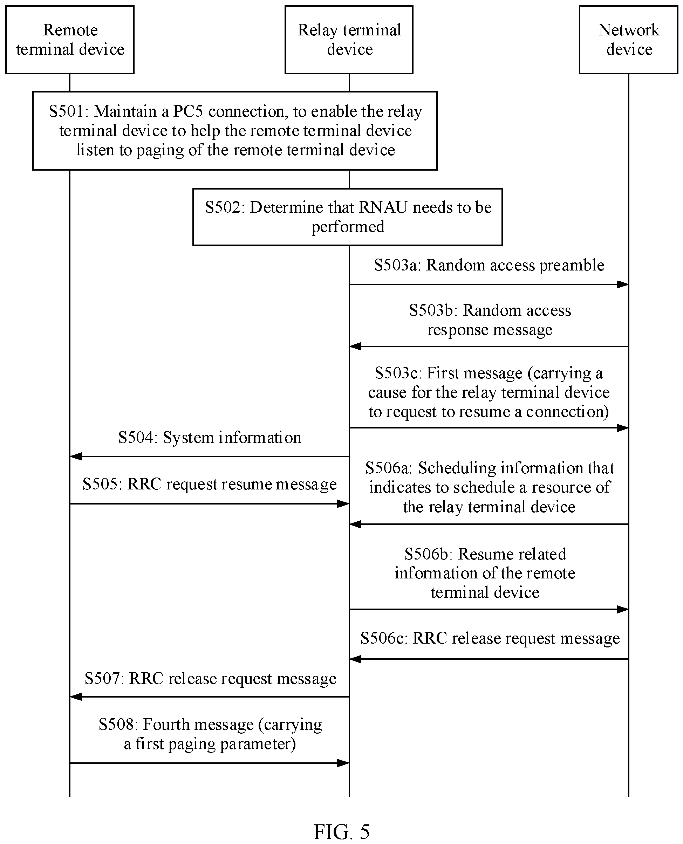

In the embodiment in FIG. 4, an example in which the relay UE keeps in the RRC connected state to help the remote UE perform the RNAU is used. The following describes a second communication method provided in an embodiment of this application. In the method, relay UE does not need to enter an RRC connected state, and can also help remote UE perform RNAU. FIG. 5 is a schematic flowchart of the method. A technical solution provided in this embodiment of this application may also be applied to the network architecture shown in FIG. 1.

S501: The remote UE maintains a PC5 connection to the relay UE, to enable the relay UE to help the remote UE listen to paging of the remote UE.

Specific implementation of S501 is the same as a specific implementation of S401. For details, refer to related content of S401 in the embodiment shown in FIG. 4.

S502: The relay UE determines that RNAU needs to be performed.

Specific implementation of S502 is the same as specific implementation of S402. For details, refer to related content of S402 in the embodiment shown in FIG. 4.

S503a: The relay UE sends a random access preamble (preamble) to a network device, and correspondingly, the network device receives the preamble from the relay UE. The network device is a network device on which the relay UE camps.

In this embodiment of this application, the preamble is a dedicated preamble, and the network device may determine, based on the preamble sent by the relay UE, that the relay UE performs random access for the remote UE. Then, the network device configures, for the relay UE, a resource used to send the first message (Msg3).

S503b: The network device sends a random access response (random access response, RAR) message to the relay UE, and correspondingly, the relay UE receives the RAR message from the network device.

The network device configures, for the relay UE based on the dedicated preamble sent by the relay UE, the resource used to send the first message (Msg3), generates the random access response message, and sends the random access response message to the relay UE. The random access response message carries the resource used to send Msg3.

S503c: The relay UE sends a first message to the network device, and correspondingly, the network device receives the first message from the relay UE, where the first message is used to resume a connection between the relay UE and the network device, and the first message further indicates a cause for the relay UE to resume the connection.

Specific implementation of S503c is the same as specific implementation of S403c. For details, refer to related content of S403c in the embodiment shown in FIG. 4.

It should be noted that, if the preamble sent by the relay UE to the network device in S503a is the dedicated preamble, the cause (that is, a first indication) for the relay UE to resume the connection in the first message may reuse a cause for the relay UE or the remote UE to establish or resume a connection currently, or may use a new cause. For example, the relay UE expects to keep in an RRC connected state. Alternatively, the relay UE performs RNAU, and the relay UE expects to keep in an RRC connected state.

If the preamble sent by the relay UE to the network device in S503a is not the dedicated preamble, and the first message is sent over a specific CCCH, the cause (that is, the first indication) for the relay UE to resume the connection in the first message may reuse a cause for the relay UE or the remote UE to establish or resume a connection currently, or use a new cause. For example, the relay UE expects to keep in an RRC connected state. Alternatively, the relay UE performs RNAU, and the relay UE expects to keep in an RRC connected state.

S504: The relay UE forwards SI to the remote UE, and correspondingly, the remote UE receives the SI from the relay UE.

Specific implementation of S504 is the same as specific implementation of S404. For details, refer to related content of S404 in the embodiment shown in FIG. 4.

S505: The remote UE sends an RRC resume request message to the relay UE by using an SRB on an SL, and correspondingly, the relay UE receives the resume request message from the remote UE. The resume request message is used by the remote UE to perform the RNAU.

Specific implementation of S505 is the same as specific implementation of S405. For details, refer to related content of S405 in the embodiment shown in FIG. 4.

S506a: The network device sends scheduling information to the relay UE, and correspondingly, the relay UE receives the scheduling information from the network device, where the scheduling information indicates to schedule an uplink grant (UL grant) resource of the relay UE.

The network device may determine, based on the dedicated preamble sent by the relay UE or based on the cause that is for the relay UE to resume the connection that is indicated by the first message, that the network device needs to continue to schedule the UL grant resource of the relay UE. Then, the network device may generate configuration information, and send the configuration information to the relay UE. After receiving the configuration information, the relay UE may transmit some related information of the remote UE, for example, assistance information of the remote UE, on the UL grant resource indicated by the configuration information.

S506b: The relay UE sends related resume information of the remote UE to the network device on the scheduled UL grant resource, and correspondingly, the network device receives the related resume information from the remote UE.

The related resume information of the remote UE includes assistance information of the remote UE. The assistance information may indicate remote UE or remote UEs that subsequently need to resume a connection, or indicate remote UE or remote UEs for which the relay UE subsequently needs to provide a relay service, for example, indicate remote UE or remote UEs that further need to update an RNA.

For example, the assistance information is used as indication information, and may indicate that the relay UE further needs to update an RNA for the remote UE subsequently. For another example, the assistance information includes a resume ID of one or more remote UEs and a cause, that is, implicitly indicates that one or more remote UEs need to resume a connection subsequently, and the cause for the relay UE to resume the connection is a cause indicated by the cause in the assistance information. For another example, the assistance information includes a resume ID of some remote UE and a cause, that is, indicates that the remote UE needs to resume a connection. The assistance information further indicates that one or more remote UEs need to resume a connection subsequently, to indicate the network device to continue to schedule the UL grant resource of the relay UE.

The network device may help the remote UE perform the RNAU based on the assistance information. In this manner, the relay UE does not need to enter the RRC connected state, and the remote UE can also update the RNA. This further reduces power consumption of the relay UE.

S506c: The network device determines that the remote UE completes the RNAU, and sends an RRC release message to the relay UE, and correspondingly, the relay UE receives the RRC release message from the network device.

The network device determines that the remote UE completes the RNAU, and may send the RRC release message to the relay UE. The RRC release message may carry release configuration information of the relay UE and ID information of the relay UE, to put the relay UE back to an RRC inactive state, thereby reducing energy consumption of the relay UE. Similarly, the RRC release message may further carry release configuration information of the remote UE and identification information of the remote UE, to put the remote UE back to the RRC inactive state, thereby reducing energy consumption of the remote UE.

In an example, the network device may send the RRC release message to the relay UE by using an SRB 1 of the relay UE, and the RRC release message includes the release configuration information of the relay UE, the ID information of the relay UE, and the RRC release message of the remote UE. For example, the RRC release message of the relay UE includes a container (container), and the container includes the RRC release message of the remote UE. In this manner, the relay UE may not be able to decrypt the RRC release message of the remote UE, that is, the relay UE may not be able to obtain a release-related configuration in the RRC release message of the remote UE, for example, one or more of an ID of the remote UE, a RAN paging cycle of the remote UE, and a RAN configuration of the remote UE.

In another example, the RRC release message sent by the network device to the relay UE includes release configuration information of the remote UE and ID information of the remote UE, for example, one or more of an ID of the remote UE, a RAN paging cycle of the remote UE, and a RAN configuration of the remote UE.

S507: The relay UE sends the RRC release message to the remote UE, and correspondingly, the remote UE receives the RRC release message from the relay UE, where the RRC release message includes release configuration information of the remote UE and ID information of the remote UE.

The relay UE receives the RRC release message from the network device, and if the relay UE determines that the RRC release message includes the RRC release message of the remote UE, the relay UE sends the RRC release message to the remote UE. The RRC release message sent by the relay UE to the remote UE includes the release configuration information of the remote UE and the ID information of the remote UE, so that the remote UE is put back to the RRC inactive state or an idle state, to reduce energy consumption of the remote UE.

S508: The remote UE sends a fourth message to the relay UE, and correspondingly, the relay UE receives the fourth message from the remote UE. The fourth message carries a first paging parameter.

Specific implementation of S508 is the same as specific implementation of S408. For details, refer to related content of S408 in the embodiment shown in FIG. 4.

According to the process in FIG. 5, the network device receives the first message from the relay UE, and determines that the remote UE needs to perform the RNAU by using the relay UE. After receiving the first message, the network device does not send the RRC release message to the relay, but determines to continue to schedule the UL grant resource of the relay UE, so that the relay UE transmits the assistance information of the remote UE. The network device may help the remote UE perform the RNAU based on the assistance information. In this manner, the relay UE does not need to enter the RRC connected state, and the remote UE can also update the RNA. This further reduces power consumption of the relay UE.

Same as the process in FIG. 4, in the process in FIG. 5, after updating the RNA, the remote UE may notify the relay UE of a paging parameter obtained after the RNA is updated, to avoid that the relay UE misses listening to paging of the remote UE. After updating the RNA, the remote UE may further notify the relay UE of the updated RNA. In this way, the relay UE may determine in advance whether the remote UE subsequently updates the RNA, so that the remote UE can enter the RRC connected state in advance. This shortens the delay of subsequently updating the RNA by the remote UE.

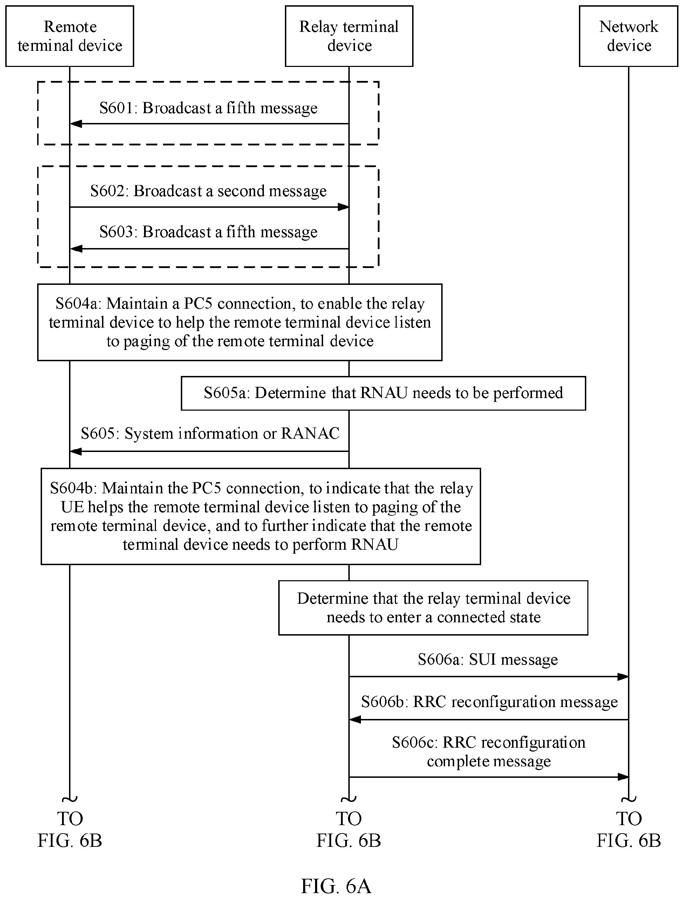

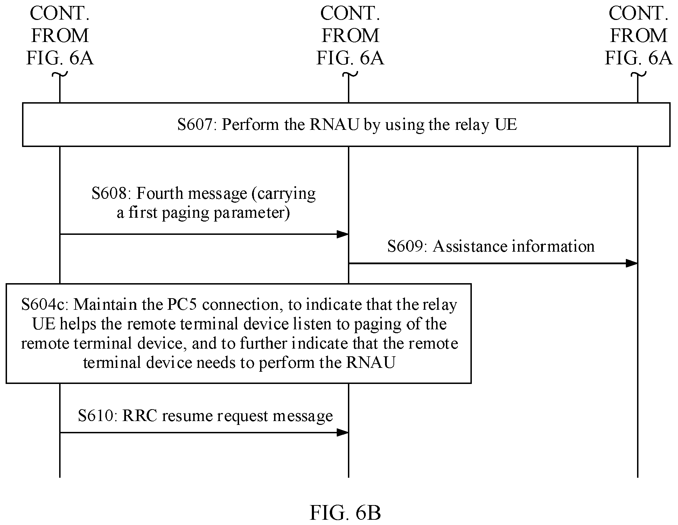

In embodiments in FIG. 4 and FIG. 5, examples in which the relay UE helps the remote UE perform the RNAU are used. It should be understood that if the relay UE and the remote UE are located in a same RNA, the relay UE may help the remote UE listen to paging. The following describes a third communication method provided in an embodiment of this application. The method is intended to search for relay UE for remote UE in an RRC inactive state to help listen to paging of the remote UE. FIG. 6A and FIG. 6B are a schematic flowchart of the method. A technical solution provided in this embodiment of this application may also be applied to the network architecture shown in FIG. 1.

S601: Relay UE broadcasts a fifth message, and correspondingly, remote UE receives the fifth message, where the fifth message indicates an RNA of the relay UE.

The fifth message is intended to help the remote UE find, from a plurality of relay UEs, relay UE that can help the remote UE listen to paging. Therefore, the fifth message may be a discovery announcement (discovery announcement) message, that is, used to discover the plurality of relay UEs, to find the relay UE that can help the remote UE listen to paging. The discovery message may carry information that indicates the RNA of the relay UE, for example, RAN-Areacode of a cell on which the relay UE currently camps. Certainly, the discovery message further includes ID information of the relay UE, for example, a PLMN ID. The remote UE may periodically listen to the discovery message. After listening to the discovery message, the remote UE obtains RAN-Areacode of a cell on which the relay UE currently camps from the discovery message, and compares the RAN-Areacode with RAN-Areacode of a cell on which the remote UE currently camps or RAN-Areacode included in an RNA of the remote UE, to determine whether the RAN-Areacode of the cell on which the relay UE currently camps belongs to the RNA of the remote UE. If the remote UE determines that RAN-Areacode of a cell on which some relay UE currently camps belongs to the RNA of the remote UE, that is, the relay UE and the remote UE are located in a same RNA, the remote UE may request the relay UE to help listen to paging from a network device, or may request the relay UE to help listen to paging from a core network device. When the remote UE discovers the plurality of relay UEs, the remote UE preferentially selects the relay UE that is located in the same RNA as the remote UE.

In an alternative solution of S601, for example, S602 and S603 in the following, the fifth message may alternatively be a discovery response (discovery response) message in S603. That is, S601, and S602 and S603 are two optional solutions, and only one of the solutions needs to be performed.

S602: The remote UE broadcasts a second message, and correspondingly, the relay UE receives the second message, where the second message may be a discovery solicitation (discovery solicitation) message broadcast by the remote UE, the discovery solicitation message indicates the RNA of the remote UE, and the relay UE may determine, based on the message, whether the remote UE and the relay UE are located in a same RNA.

S603: The relay UE broadcasts a fifth message, and correspondingly, the remote UE receives the fifth message, where the fifth message may be the discovery response message sent by the relay UE to the remote UE based on the received discovery solicitation message, and correspondingly, the remote UE receives the discovery response message, where the discovery response message indicates an RNA of the relay UE, and the remote UE may determine, based on the message, whether the remote UE and the relay UE are in the same RNA.

A difference from S601 lies in that the remote UE may request to discover the relay UE that is located in the same RNA as the remote UE. The discovery solicitation message may carry information that indicates the RNA of the remote UE, for example, RAN-Areacode of a cell on which the remote UE currently camps. Certainly, the discovery message further includes ID information of the remote UE, for example, a PLMN ID.

Any relay UE may periodically listen to the discovery message. After listening to the discovery message, the relay UE obtains the RAN-Areacode of the cell on which the remote UE currently camps in the discovery solicitation message, compares the RAN-Areacode with RAN-Areacode of a cell on which the relay UE currently camps or RAN-Areacode included in the RNA of the relay UE, to determine whether the RAN-Areacode of the cell on which the relay UE currently camps belongs to the RNA of the remote UE.

If some relay UE determines that RAN-Areacode of a cell on which the relay UE currently camps belongs to the RNA of the remote UE, that is, the relay UE and the remote UE are located in a same RNA, the relay UE may notify the remote UE that the RNA of the relay UE and the RNA of the remote UE are located in a same area. For example, the relay UE may send a discovery message to the remote UE, where the discovery message may carry RAN-Areacode of a cell on which the relay UE currently camps and an ID of the relay UE. After receiving the discovery message, the remote UE may request the relay UE indicated in the discovery message to help listen to paging from the network device, or may request to help listen to paging from the core network device.

The discovery message in S601 and S603 carries the RAN-Areacode of the cell on which the relay UE currently camps, so that the remote UE can find the relay UE that is located in the same RNA as the remote UE. In other words, the remote UE does not select relay UE that is not located in the same RNA as the remote UE to help listen to paging. This improves reliability of requesting, by the remote UE, the relay UE to help listen to paging.

If the remote UE finds that there is no relay UE that is located in the same RNA as the remote UE, the remote UE may notify the relay UE that the remote UE needs to perform RNAU. Alternatively, the remote UE performs RNAU under newly connected relay UE, to ensure that the remote UE with an updated RNA can request the relay UE to help listen to paging. The following separately describes a process in which the remote UE notifies the relay UE that the remote UE needs to perform the RNAU (referred to as process 1 in this specification), and a process in which the remote UE performs the RNAU under the newly connected relay UE (referred to as process 2 in this specification).

A specific procedure of process 1 is as follows:
S604a: The remote UE establishes a PC5 connection to relay UE, to enable the relay UE to help the remote UE listen to paging of the remote UE.

For implementation of S604a, refer to related content of S401 in the embodiment in FIG. 4. Details are not described herein again.

S605a: The relay UE determines that RNAU needs to be performed.

For implementation of S605a, refer to related content of S402 in the embodiment in FIG. 4. Details are not described herein again.

S605: The relay UE sends SI or RANAC to the remote UE.

A process in which the remote UE establishes the PC5 connection to the relay UE may trigger the relay UE to send the SI or the RANAC to the remote UE. For more content of S605, refer to related content of S404 in the embodiment shown in FIG. 4.

S606a: The relay UE sends an SUI message to the network device, and correspondingly, the network device receives the SUI message from the relay UE. The SUI message is used to request to establish relay.

For specific implementation of S606a, refer to related content of S406a in the embodiment in FIG. 4.

S606b: The network device sends anRRC reconfiguration message to the relay UE, and correspondingly, the relay UE receives the RRC reconfiguration message from the network device.

For specific implementation of S606b, refer to related content of S406b in the embodiment in FIG. 4.

S606c: The relay UE sends an RRC reconfiguration complete message to the network device, and correspondingly, the network device receives the RRC reconfiguration complete message from the relay UE.

For specific implementation of S606c, refer to related content of S406c in the embodiment in FIG. 4.

S607: The remote UE performs the RNAU by using the relay UE.

For specific implementation of S607, refer to related content of S407 in the embodiment in FIG. 4.

S608: The remote UE sends a fourth message to the relay UE, and correspondingly, the relay UE receives the fourth message from the remote UE. The fourth message carries a first paging parameter.

For specific implementation of S608, refer to related content of S408 in the embodiment in FIG. 4.

S609: The relay UE sends assistance information to the network device, and correspondingly, the network device receives the assistance information, which is used to request to release a connection of the relay UE and/or the remote UE. Therefore, energy consumption of the relay UE and/or the remote UE is reduced.

As an alternative solution of process 1, the following process may be executed:
S604c: The remote UE establishes the PC5 connection to the relay UE, to indicate that the relay UE helps the remote UE listen to paging of the remote UE, and notify the relay UE that the remote UE needs to perform RNAU.

In this process, the relay UE learns that the remote UE needs to perform the RNAU by using the relay UE, and the relay UE may not enter an RRC connected state to help the remote UE perform the RNAU. In a subsequent embodiment of this application, a procedure in which the relay UE does not enter the RRC connected state to help the remote UE perform the RNAU may be performed, that is, S505 to S508 in the embodiment in FIG. 5. Details are not described herein again.

A specific procedure of process 2 is as follows:
S604b: The remote UE establishes the PC5 connection to the relay UE, to indicate that the relay UE helps the remote UE listen to paging of the remote UE, and to indicate the remote UE to perform the RNAU.

In this case, the relay UE does not need to determine whether the RNA of the remote UE is the same as the RNA of the relay UE, and directly determines that the remote UE performs the RNAU, so that the relay UE determines to enter the RRC connected state.

S610: The remote UE sends an RRC resume request message to the relay UE, to request to resume a connection to the network device.

It should be noted that the RRC resume request message may not be the second message.

In a subsequent embodiment of this application, a procedure in which the relay UE does not enter the RRC connected state to help the remote UE perform the RNAU may be performed, that is, S403a to S409 in the embodiment in FIG. 4. For example, S403a to S409 may be performed, but S405 in the embodiment in FIG. 4 may not be performed. Details are not described herein. Alternatively, in a subsequent embodiment of this application, a procedure in which the relay UE does not enter the RRC connected state to help the remote UE perform the RNAU may be performed, that is, S503a to S509 in the embodiment in FIG. 5. Details are not described herein again.

In the process shown in FIG. 6A and FIG. 6B, the remote UE may assist, based on the RAN-Areacode in the discovery message, the remote UE in selecting appropriate relay UE to provide a relay service, to avoid that the remote UE selects relay UE that needs to perform RNAU to provide a relay service, thereby reducing power consumption of the remote UE and the relay UE. In addition, the relay UE may determine, by using the discovery solicitation message, whether the remote UE subsequently performs an RANU, to perform a subsequent procedure based on a determining result.

In the foregoing embodiment, a solution in which an RRC resume request message carries a cause when the relay UE may be triggered by updating the RNA by the remote UE to send the RRC resume request message to the network device, or the relay UE sends the RRC resume request message to the network device to assist the remote UE in updating the RNA, and a solution in which the RNA of the remote UE is subsequently updated are described. The cause carried in the RRC resume request message may be a cause for the remote UE to perform a service by using the relay UE. For example, in an L3 relay solution supported in an existing standard, the remote UE may send data by using the relay UE. From the perspective of the network device, only the relay UE is connected to the network device. When the remote UE initiates a connection establishment request to the relay UE, the relay UE may enter the RRC connected state. Because in this case, the relay UE enters the RRC connected state due to data of the remote UE, a cause for entering the RRC connected state may be MO data. In another case, the network device pages the relay UE. However, because data of the remote UE arrives, in this case, a cause for the relay UE to enter the RRC connected state is MT-access. The network device may perform corresponding access control based on the cause for the relay UE to enter the RRC connected state.

However, for L2 relay, because the remote UE is independently registered with a network, in this case, the remote UE triggers the relay UE to enter the RRC connected state, and the relay UE needs to fill in a network access cause. For example, the relay UE helps the remote UE perform access control, and fills in an access cause of the relay UE based on an access cause of the remote UE. For the network device, the network device cannot distinguish whether the access cause of the relay UE is for the relay UE or the remote UE, and therefore may perform incorrect processing.

In view of this, an embodiment of this application provides a fourth communication method. The method provides how to fill in an access cause of relay UE when the relay UE performs access control due to remote UE. The relay UE may properly fill in, based on a service of the remote UE, a cause for establishing and resuming a connection, and perform unified access control. In this way, a network device can be assisted in properly configuring the relay UE, to avoid that the network device may perform incorrect processing because the network device cannot determine whether the access cause of the relay UE is for the relay UE or for the remote UE.

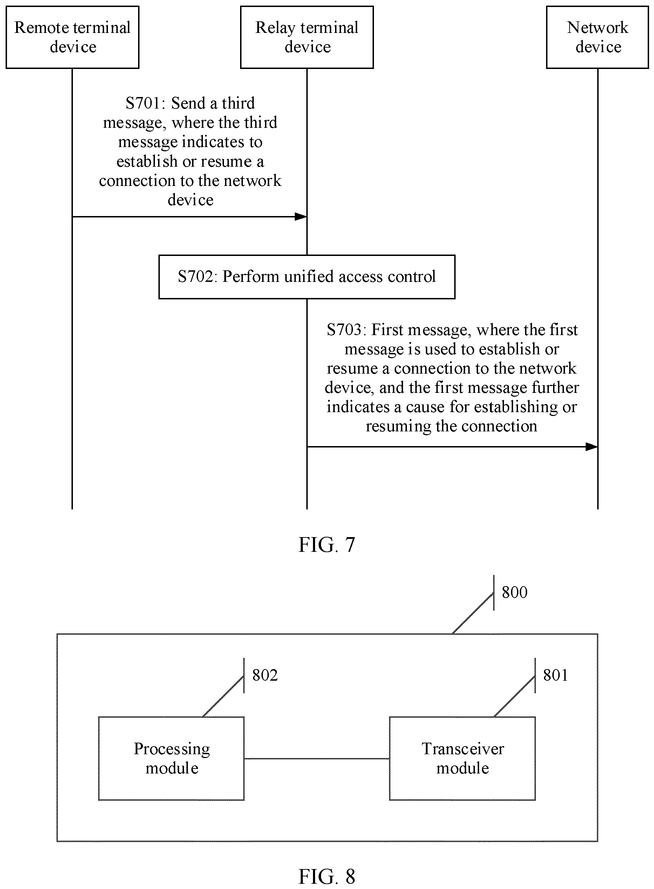

The method provided in this embodiment of this application is also applicable to the network architecture shown in FIG. 1. Next, an example in which this embodiment of this application is applied to the network architecture shown in FIG. 1 is used to describe the fourth communication method according to this embodiment of this application. FIG. 7 is a flowchart of the method.

S701: Remote UE sends a third message to relay UE, and correspondingly, the relay UE receives the third message from the remote UE, where the third message indicates to establish or resume a connection to a network device.

When the remote UE needs to perform a service, the remote UE may request to establish or resume the connection to the network device, or request the relay UE to establish or resume the connection to the network device, to provide a relay service for the remote UE by using the relay UE. For example, the remote UE may send the third message to the relay UE, to request to establish the connection to the network device or resume the connection to the network device. The third message may be an RRC setup request (RRC setup request) message, and the third message is used to request the remote UE to establish the connection to the network device. The third message may alternatively be an RRC resume request (RRC resume request) message. In this case, the third message is used to request the remote UE to resume the connection to the network device. After receiving the third message, the relay UE may trigger the relay UE to initiate a process of establishing or resuming the connection to the network device. For example, after the relay UE receives an RRC connection setup request message of the remote UE, the relay UE is triggered by an establishment cause in the connection setup request message or information that is about a service to be initiated and that is included in a PC5 RRC message or a PC5-S message sent by the remote UE to initiate a connection establishment process to the network device. The information that is about the service to be initiated and that is included in the PC5 RRC message or the PC5-S message sent by the remote UE is, for example, that the service to be initiated by the remote UE is a TAU, or the service to be initiated by the remote UE is MO-data. For another example, after the relay UE receives the RRC connection resume request message of the remote UE, the relay UE is triggered by a resume cause in the connection resume request message or information that is about a service to be initiated and that is included in a PC5 RRC message or a PC5-S message sent by the remote UE to initiate a connection resume process to the network device. The information that is about the service to be initiated and that is included in the PC5 RRC message or the PC5-S message sent by the remote UE is, for example, that the service to be initiated by the remote UE is an RANU, or the service to be initiated in the inactive state is MO-data. It should be noted that, the information that is about the service to be initiated and that is included in the PC5 RRC message or the PC5-S message sent by the remote UE is only an example. In this embodiment of this application, the information that is about the service to be initiated and that is included in the PC5 RRC message or the PC5-S message sent by the remote UE is not limited, for example, includes that the service to be initiated by the remote UE is ro-signaling, ro-VoiceCall, ro-Video Call, ro-SMS, or rt-Access.

S702: The relay UE performs unified access control.

For L2 relay, the remote UE may perform unified access control on a service of the remote UE. If the remote UE performs unified access control on a service of the remote UE, the relay UE does not need to additionally help the remote UE perform access control on the service of the remote UE. The relay UE may not perform unified access control based on the service of the remote UE, that is, does not perform S702 or reset an access category (access category, AC) of the remote UE, so that the network device allows access of the relay UE.

In an example, if an RRC connection resumption or establishment requested by the relay UE is triggered by a service of the remote UE, it is considered that the access is allowed. Correspondingly, the relay UE may directly access a network without performing unified access control based on the service of the remote UE.

In another example, if resumption or establishment of an RRC connection of the relay UE is triggered by the service of the remote UE, the access category may be set to 0. Correspondingly, the relay UE may set the access category of the remote UE to 0 based on the service of the remote UE.

In another example, if resumption or establishment of an RRC connection of the relay UE is triggered by the service of the remote UE, a new access category may be allocated. Correspondingly, the relay UE may allocate the new access category based on the service of the remote UE, so that the relay UE performs unified access control.

A specified value of the access category may be determined by an RRC layer of the relay UE. For example, the specified value of the access category is specified by the RRC layer of the relay UE after PC5 RRC of the relay UE is triggered. Alternatively, a specified value of the access category may be determined by a NAS of the relay UE. For example, the specified value of the access category may be specified by the NAS of the relay UE for an RRC layer of the relay UE after PC5 RRC of the relay UE is triggered.

S703: The relay UE sends a first message to the network device, and correspondingly, the network device receives the first message from the relay UE, where the first message is used to establish or resume a connection between the relay UE and the network device, and the first message further indicates a cause for the relay UE to establish or resume the connection.

After receiving the third message, the relay UE determines that the remote UE can perform access, and sends the first message to the network device, to request the connection to the network device. The first message may be an RRC resume request message, or the RRC resume request message may be Msg3 in a random access process. In the following description, an example in which the first message is Msg3 in the random access process is used. It may be considered that sending Msg3 by the relay UE to the network device is triggered by the remote UE.

Then, the relay UE sends Msg3 to the network device, and a cause for establishing a connection or a cause for resuming a connection that is carried in Msg3 may be determined based on a cause for initiating a service by the remote UE. For example, a connection establishment cause carried in Msg3 may be determined based on an establishment cause in a connection setup request message sent by the remote UE or information that is about a service to be initiated and that is included in a PC5 RRC message or a PC5-S message sent by the remote UE.

In an example, the relay UE introduces, based on a cause in an RRC resume request message or an RRC setup request message sent by the remote UE, a new cause corresponding to the relay UE into an RRC resume request message or an RRC setup request message sent to the network device.

In another example, the relay UE reuses a cause in an RRC resume request message or an RRC setup request message, but introduces a new cause for the relay UE in some cases. For example, the relay UE sends the RRC resume request message or the RRC setup request message to the network device because the remote UE needs to perform RNAU by using the relay UE. In this case, a new cause may be introduced.

Based on a current state of the relay UE and the remote UE, for example, an RRC connected state, an RRC inactive state, or an idle state, the relay UE may fill in different causes in the RRC resume request message or the RRC setup request message. With reference to Table 1, the following lists, for the foregoing two examples, causes that may be carried in the RRC resume request message or the RRC setup request message sent by the relay UE to the network device.

Table 1 shows a cause that may be carried in the RRC resume request message or the RRC setup request message sent by the relay UE to the network device. When the relay UE is in the inactive state, the relay UE needs to send the RRC resume request message. When the relay UE is in the idle state, the relay UE needs to send the RRC connection setup request message. The cause in Table 1 is an establishment cause or a resume cause of the relay UE, and a cause shown in "bold" is an existing establishment cause or resume cause of the relay UE. In addition, the relay UE in Table 1 is in the idle state.

**Table 1**

| Remote UE (status and service) | UAC status of relay UE | Introduce new cause | Reuse existing cause |
|---|---|---|---|
| Be in an idle state, and initiate a tracking area update (tracking area update, TAU) | If UAC is not performed or access is triggered by performing relay, an AC is set to 0; or a new AC indicates access of relay. | ro-Signaling | **mo-Signaling** |
| Be in the idle state, and initiate data transmission | | ro-Data | **mo-Data** |
| | A specified value of the AC may be specified by a NAS of the relay UE to an RRC layer of the relay UE after being triggered by PC5 RRC of the relay UE, or may be specified by the RRC layer of the relay UE after PC5 RRC of the relay UE is triggered. | | |
| Be in the idle state, and initiate a voice call | | ro-VoiceCall/ro-VideoCall | **mo-VoiceCall/mo-VideoCall** |
| Be in the idle state, and initiate an SMS | | ro-SMS | **mo-SMS** |
| Be in the idle state, and initiate an emergency call | | ro-emergency | **mo-emergency** |
| Be in the idle state, and respond to CN paging | | rt-Access | **mt-Access** |
| Be in an inactive state, and initiate RNAU | | remote-rna-Update | remote-rna-Update |
| Be in the inactive state, and initiate data transmission | | ro-Data | **mo-Data** |
| Be in the inactive state, and initiate a voice call | | ro-VoiceCall/ro-VideoCall | **mo-VoiceCall/mo-VideoCall** |
| Be in the inactive state, and initiate an SMS | | ro-SMS | **mo-SMS** |
| Be in the inactive state, and initiate an emergency call | | ro-emergency | **mo-emergency** |
| Be in the inactive state, and receive RAN paging | | rt-Access | **mt-Access** |
| Be in a connected state, and initiate path switch | | Relay-pathswitch | Relay-pathswitch |

Table 1 shows a solution in which, for L2 relay, the relay UE fills in an access cause of the relay UE when the relay UE performs access control due to the remote UE. The relay UE may properly fill in, based on the service of the remote UE, the cause for establishing or resuming the connection, and perform unified access control, to assist the network device in properly configuring the relay UE, thereby avoiding that the network device may perform incorrect processing because the network device cannot determine whether the access cause of the relay UE is for the relay UE or the remote UE.

In the foregoing embodiments provided in this application, the method provided in the embodiment of this application is described from a perspective of interaction between the terminal, the network device, and the location management device. To implement functions in the foregoing method provided in embodiments of this application, a terminal, a network device, and a location management device may include hardware structures and/or software modules, to implement the foregoing functions in a form of a hardware structure, a software module, or a combination of the hardware structure and the software module. Whether a function in the foregoing functions is performed by using the hardware structure, the software module, or the combination of the hardware structure and the software module depends on particular application and design constraints of the technical solution.

With reference to the accompanying drawings, the following describes apparatuses configured to implement the foregoing methods in embodiments of this application. Therefore, all the foregoing content may be used in the following embodiments. Repeated content is not described again.

FIG. 8 is a possible example block diagram of a communication apparatus according to this application. The communication apparatus 800 may correspondingly implement functions or steps implemented by the relay UE (the first device), the network device, or the remote UE (the second device) in the foregoing method embodiments. The communication apparatus may include a transceiver module 801 and a processing module 802. Optionally, the apparatus may further include a storage module. The storage module may be configured to store instructions (code or a program) and/or data. The transceiver module 801 and the processing module 802 may be coupled to the storage module. For example, the processing module 802 may read the instructions (the code or the program) and/or the data in the storage module, to implement a corresponding method. The foregoing modules may be disposed independently, or may be partially or totally integrated.

It should be understood that, the processing module 802 may be a processor or a controller, for example, may be a general-purpose central processing unit (central processing unit, CPU), a general-purpose processor, a digital signal processor (digital signal processor, DSP), an application-specific integrated circuit (application specific integrated circuits, ASIC), a field programmable gate array (field programmable gate array, FPGA) or another programmable logic device, a transistor logic device, a hardware component, or any combination thereof. The processing apparatus may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 801 is an interface circuit of the apparatus, and is configured to receive a signal from another apparatus. For example, when the apparatus is implemented in a form of a chip, the transceiver module 801 is an interface circuit used by the chip to receive a signal from another chip or apparatus, or is an interface circuit used by the chip to send a signal to another chip or apparatus.

The communication apparatus 800 may be the relay UE, the network device, or the remote UE in the foregoing embodiments, or may be a chip used for the relay UE, the network device, or the remote UE. For example, when the communication apparatus 800 is relay UE, a network device, or remote UE, the processing module 802 may be, for example, a processor, and the transceiver module 801 may be a transceiver. Optionally, the transceiver may include a radio frequency circuit, and the storage unit may be, for example, a memory. For example, when the communication apparatus 800 is a chip used for relay UE, a network device, or remote UE, the processing module 802 may be a processor, and the transceiver module 801 may be, for example, an input/output interface, a pin, or a circuit. The processing module 802 may execute computer-executable instructions stored in the storage unit. Optionally, the storage unit is a storage unit, such as a register or a buffer, inside the chip. Alternatively, the storage unit may be a storage unit that is in the relay UE, the network device, or the remote UE and that is located outside the chip, such as a read-only memory (read-only memory, ROM) or another type of static storage device that can store static information and instructions, or a random access memory (random access memory, RAM).

In some possible implementations, the communication apparatus 800 can correspondingly implement behavior and functions of the relay UE in the method embodiments. For example, the communication apparatus 800 may be relay UE, or may be a component (for example, a chip or a circuit) used in the relay UE. The transceiver module 801 may be configured to support communication between the relay UE and another network entity, for example, support communication between the relay UE and the network device and/or the remote UE shown in any one of the embodiments in FIG. 4 to FIG. 7. The processing module 802 is configured to control and manage an action of the relay UE. For example, the processing module 802 is configured to support the relay UE in performing all operations other than transmitting and receiving of the relay UE in any one of the embodiments in FIG. 4 to FIG. 7. The transceiver module 801 is configured to perform all receiving or sending operations performed by the relay UE, and/or configured to support another process of the technology described in this specification. For example, the transceiver module 801 is configured to support the relay UE in performing all receiving or sending operations performed by the relay UE in any one of the embodiments in FIG. 4 to FIG. 7.

In some embodiments, the processing module 802 is configured to generate a first message. The first message is used to resume a connection to the network device, and the first message further indicates a cause for the communication apparatus 800 to resume the connection. The transceiver module 801 is configured to send the first message to the network device. Sending of the first message is triggered by sending RNA update by the second device, or the connection resumed by the communication apparatus 800 is used by the second device to update an RNA.

In an optional implementation, the first message includes a first indication, and the first indication indicates the cause for the communication apparatus 800 to resume the connection.

Alternatively, the first message includes a first indication and a second indication, the first indication indicates the cause for the communication apparatus 800 to resume the connection, and the second indication indicates whether the communication apparatus 800 resumes the connection for the second device.

Alternatively, the first message is sent over a first CCCH, and indicates that the communication apparatus 800 establishes or resumes the connection for the second device, the first message includes a first indication, and the first indication indicates the cause for the communication apparatus 800 to establish or resume the connection.

Alternatively, the first message is sent by using a resource included in a random access response message received by the communication apparatus 800, the first message includes a first indication, and the first indication indicates the cause for the communication apparatus 800 to resume the connection, and before the first message is sent, a random preamble sent by the transceiver module 801 to the network device indicates that the communication apparatus 800 performs random access for the second device.

Alternatively, the first message is sent over a first CCCH, and indicates that the communication apparatus 800 resumes the connection for the second device.

Alternatively, the first message is sent by using a resource included in a random access response message received by the transceiver module 801, and before the first message is sent, a random preamble sent by the transceiver module 801 to the network device indicates that the communication apparatus 800 performs random access for the second device.

In an optional implementation, the transceiver module 801 is further configured to receive a second message from the second device, where the second message indicates that the second device needs to update an RNA.

Alternatively, if access network area code RAN-Areacode of a cell on which the communication apparatus 800 currently camps does not belong to an RNA of the second device, the processing module 802 determines to send the first message to the network device.

In an optional implementation, the second message includes RAN-Areacode included in the RNA of the second device, or the second message includes RAN-Areacode of a cell on which the second device currently camps.

In an optional implementation, the transceiver module 801 is further configured to broadcast a fifth message, and the fifth message includes RAN-Areacode of a cell on which the communication apparatus 800 camps.

In an optional implementation, the transceiver module 801 is further configured to: after the second device completes the RNA update, receive a fourth message from the second device, where the fourth message carries a first paging parameter, and the first paging parameter is used by the communication apparatus 800 to listen to paging from the network device for the second device.

In a possible implementation, the fourth message further carries a second paging parameter, and the second paging parameter is used by the communication apparatus 800 to listen to paging from a core network device for the second device.

In a possible implementation, the fourth message further carries an updated RNA of the second device.

In an optional implementation, the first indication indicates that the communication apparatus 800 expects to keep in an RRC connected state.

Alternatively, the first indication indicates that the cause for resuming the connection or establishing the connection is that the second device initiates signaling (ro-signaling).

Alternatively, the first indication indicates that the cause for resuming the connection or establishing the connection is that the second device performs RNAU r-rna-Update.

Alternatively, the first indication indicates that the cause for resuming the connection or establishing the connection is performing a relay (relay) service.

In a possible implementation, the first indication indicates that the cause for resuming the connection or establishing the connection is that the communication apparatus 800 initiates data (mo-data).

Alternatively, the first indication indicates that the cause for resuming the connection or establishing the connection is that the communication apparatus 800 initiates signaling (mo-signaling).

Alternatively, the first indication indicates that the cause for resuming the connection or establishing the connection is that the communication apparatus 800 initiates a voice (mo-VoiceCall), a video (mo-VideoCall), or an SMS message (mo-SMS).

Alternatively, the first indication indicates that the cause for resuming the connection or establishing the connection is that the communication apparatus 800 is paged for access (mt-Access).

Alternatively, the first indication indicates that the cause for resuming the connection or establishing the connection is that the communication apparatus 800 performs RNAU rna-Update and the communication apparatus 800 keeps in the RRC connected state.

In an optional implementation, the first indication is sent by a NAS of the transceiver module 801 to an RRC layer of the communication apparatus 800 when the processing module 802 determines that the second device needs to send signaling or data.

Alternatively, the first indication is determined by an RRC layer of the communication apparatus 800 when the processing module 802 determines that the second device needs to send signaling or data.

Alternatively, a channel for sending the first message is determined by an RRC layer of the communication apparatus 800 when the transceiver module 801 determines that the second device needs to send signaling or data.

In a possible implementation, the first message further includes assistance information, where the assistance information indicates that the communication apparatus 800 needs to update an RNA for at least one second device.

In an optional implementation, the assistance information includes a resume ID of the second device and the first indication.

Alternatively, the assistance information includes a resume ID of the second device and the first indication, and the assistance information further indicates that the communication apparatus 800 further needs to subsequently update an RNA for at least one second device.

Alternatively, the assistance information indicates that the communication apparatus 800 further needs to update an RNA for at least one second device subsequently.

In an optional implementation, the transceiver module 801 is further configured to receive an RRC release message from the network device, where the RRC release message indicates the communication apparatus 800 and the second device to enter an RRC inactive state.

In a possible implementation, the RRC release message includes release configuration information of the second device and identification information of the second device.

In an optional implementation, the identification information of the second device includes one or more of the following information: an ID, an I-RNTI, and a 5G-S-TMSI of the second device.

In an optional implementation, the transceiver module 801 is further configured to send an RRC release message to the second device, where the RRC release message includes release configuration information of the second device.

It should be understood that the processing module 802 in this embodiment of this application may be implemented by a processor or a processor-related circuit component, and the transceiver module 801 may be implemented by a transceiver or a transceiver-related circuit component.

In some other embodiments, the transceiver module 801 is configured to receive a third message sent by the second device, where the third message indicates that the second device establishes or resumes a connection to the network device.

The transceiver module 801 is further configured to send a first message to the network device, where the first message is used to establish or resume the connection to the network device, and the first message further indicates a cause for the communication apparatus 800 to establish or resume the connection.

In an optional implementation, the first message includes a first indication, and the first indication indicates the cause for the communication apparatus 800 to resume the connection.

Alternatively, the first message includes a first indication and a second indication, the first indication indicates the cause for the communication apparatus 800 to resume the connection, and the second indication indicates whether the communication apparatus 800 resumes the connection for the second device.

Alternatively, the first message is sent over a first CCCH, and indicates that the communication apparatus 800 establishes or resumes the connection for the second device, the first message includes a first indication, and the first indication indicates the cause for the communication apparatus 800 to establish or resume the connection.

Alternatively, the first message is sent by using a resource included in a random access response message received by the communication apparatus 800, the first message includes a first indication, and the first indication indicates the cause for the communication apparatus 800 to resume the connection, and before the first message is sent, a random preamble sent by the transceiver module 801 to the network device indicates that the communication apparatus 800 performs random access for the second device.

Alternatively, the first message is sent over a first CCCH, and indicates that the communication apparatus 800 resumes the connection for the second device.

Alternatively, the first message is sent by using a resource included in a random access response message received by the transceiver module 801, and before the first message is sent, a random preamble sent by the transceiver module 801 to the network device indicates that the communication apparatus 800 performs random access for the second device.

In an optional implementation, the first indication indicates that the communication apparatus 800 expects to keep in an RRC connected state.

Alternatively, the first indication indicates that the cause for resuming the connection or establishing the connection is that the second device initiates data (ro-data).

Alternatively, the first indication indicates that the cause for resuming the connection or establishing the connection is that the second device initiates signaling (ro-signaling).

Alternatively, the first indication indicates that the cause for resuming or establishing the connection is that the second device initiates a voice (ro-VoiceCall), a video (ro-VideoCall), or an SMS message (ro-SMS).

Alternatively, the first indication indicates that the cause for resuming the connection or establishing the connection is rt-Access for the second device.

Alternatively, the first indication indicates that the cause for resuming the connection or establishing the connection is that the second device performs RNAU r-rna-Update.

Alternatively, the first indication indicates that the cause for resuming the connection or establishing the connection is performing a relay (relay) service.

In a possible implementation, the first indication indicates that the cause for resuming the connection or establishing the connection is that the communication apparatus 800 initiates data (mo-data).

Alternatively, the first indication indicates that the cause for resuming the connection or establishing the connection is that the communication apparatus 800 initiates signaling (mo-signaling).

Alternatively, the first indication indicates that the cause for resuming the connection or establishing the connection is that the communication apparatus 800 initiates a voice (mo-VoiceCall), a video (mo-VideoCall), or an SMS message (mo-SMS).

Alternatively, the first indication indicates that the cause for resuming the connection or establishing the connection is that the communication apparatus 800 is paged for access (mt-Access).

Alternatively, the first indication indicates that the cause for resuming the connection or establishing the connection is that the communication apparatus 800 performs RNAU rna-Update and the communication apparatus 800 keeps in the RRC connected state.

In an optional implementation, the first indication is sent by a NAS of the transceiver module 801 to an RRC layer of the communication apparatus 800 when the processing module 802 determines that the second device needs to send signaling or data.

Alternatively, the first indication is determined by an RRC layer of the communication apparatus 800 when the processing module 802 determines that the second device needs to send signaling or data.

Alternatively, a channel for sending the first message is determined by an RRC layer of the communication apparatus 800 when the transceiver module 801 determines that the second device needs to send signaling or data.

In some possible implementations, the communication apparatus 800 can correspondingly implement behavior and functions of the network device in the method embodiments. For example, the communication apparatus 800 may be a network device, or may be a component (for example, a chip or a circuit) used in the network device. The transceiver module 801 may be configured to support communication between the network device and another network entity, for example, support communication between the network device and the relay UE and/or the remote UE shown in any one of the embodiments in FIG. 4 to FIG. 7. The processing module 802 is configured to control and manage an action of the network device. For example, the processing module 802 is configured to support the network device in performing all operations other than transmitting and receiving of the network device in any one of the embodiments in FIG. 4 to FIG. 7. The transceiver module 801 is configured to perform all receiving or sending operations performed by the network device, and/or configured to support another process of the technology described in this specification. For example, the transceiver module 801 is configured to support the network device in performing all receiving or sending operations performed by the network device in any one of the embodiments in FIG. 4 to FIG. 7.

In some embodiments, the transceiver module 801 is configured to receive a first message from a first device, where the first message is used by the first device to establish or resume a connection to the communication apparatus 800, and the first message further indicates a cause for the first device to establish or resume the connection.

The processing module 802 is configured to determine, based on the first message, that the first device establishes or resumes the connection due to a service of a second device, where the second device is a terminal device that connects to the communication apparatus 800 by using the first device.

In an optional implementation, the communication apparatus 800 determines, based on the first message, that the cause for the first device to establish or resume the connection is that the second device performs radio access network notification area update (RNAU), and the communication apparatus 800 indicates the first device to keep in an RRC connected state or an RRC inactive state.

Alternatively, the communication apparatus 800 determines, based on the first message, that the cause for the first device to establish or resume the connection is that the first device performs RNAU.

In an optional implementation, the first message includes a first indication, and the first indication indicates the cause for the first device to resume the connection.

Alternatively, the first message includes a first indication and a second indication, the first indication indicates the cause for the first device to resume the connection, and the second indication indicates whether the first device resumes the connection for the second device.

Alternatively, the first message is sent over a first CCCH, and indicates that the first device resumes the connection for the second device, the first message includes a first indication, and the first indication indicates the cause for the first device to resume the connection.

Alternatively, the first message is sent by using a resource included in a random access response message received by the first device, where the first message includes a first indication, the first indication indicates the cause for the first device to resume the connection, and before the first message is sent, a random preamble sent by the transceiver module 801 to the communication apparatus 800 indicates that the first device performs random access for the second device.

Alternatively, the first message is sent over a first CCCH, and indicates that the first device resumes the connection for the second device.

Alternatively, the first message is sent by using a resource included in a random access response message received by the transceiver module 801, and before the first message is sent, a random preamble sent by the transceiver module 801 to the communication apparatus 800 indicates that the first device performs random access for the second device.

In an optional implementation, the first indication indicates that the communication apparatus 800 expects to keep in an RRC connected state.

Alternatively, the first indication indicates that the cause for resuming the connection or establishing the connection is that the second device initiates data (ro-data).

Alternatively, the first indication indicates that the cause for resuming the connection or establishing the connection is that the second device initiates signaling (ro-signaling).

Alternatively, the first indication indicates that the cause for resuming or establishing the connection is that the second device initiates a voice (ro-VoiceCall), a video (ro-VideoCall), or an SMS message (ro-SMS).

Alternatively, the first indication indicates that the cause for resuming the connection or establishing the connection is rt-Access for the second device.

Alternatively, the first indication indicates that the cause for resuming the connection or establishing the connection is that the second device performs RNAU r-rna-Update.

Alternatively, the first indication indicates that the cause for resuming the connection or establishing the connection is performing a relay (relay) service.

In an optional implementation, the first indication indicates that the first device expects to keep in the RRC connected state, and the processing module 802 determines that the first device keeps in the RRC connected state.

In an optional implementation, the first message further includes assistance information, and the assistance information indicates that the first device needs to update an RNA for at least one second device.

In an optional implementation, the transceiver module 801 is further configured to send an RRC release message to the first device, where the RRC release message indicates the first device and the second device to enter an RRC inactive state.

In a possible implementation, the RRC release message includes release configuration information of the second device and identification information of the second device.

In an optional implementation, the processing module 802 is further configured to configure an uplink grant resource for the first device, where the uplink grant resource is used by the first device to send assistance information of the second device, and the assistance information is used to indicate that the first device needs to update an RNA for at least one second device.

In some other embodiments, the transceiver module 801 is configured to receive a first message from the first device, where the first message is used to establish or resume a connection to the communication apparatus 800, and the first message further indicates a cause for the first device to establish or resume the connection. The processing module 802 determines, based on the first message, that the first device establishes or resumes the connection due to a service of the second device, where the second device is a terminal device that connects to the communication apparatus 800 by using the first device.

In a possible implementation, the first indication indicates that the cause for resuming the connection or establishing the connection is that the first device initiates data (mo-data).

Alternatively, the first indication indicates that the cause for resuming the connection or establishing the connection is that the first device initiates signaling (mo-signaling).

Alternatively, the first indication indicates that the cause for resuming the connection or establishing the connection is that the first device initiates a voice (mo-VoiceCall), a video (mo-VideoCall), or an SMS message (mo-SMS).

Alternatively, the first indication indicates that the cause for resuming the connection or establishing the connection is mt-Access for the first device .

Alternatively, the first indication indicates that the cause for resuming the connection or establishing the connection is that the first device performs RNAU rna-Update and the first device keeps in the RRC connected state.

It should be understood that the processing module 802 in this embodiment of this application may be implemented by a processor or a processor-related circuit component, and the transceiver module 801 may be implemented by a transceiver or a transceiver-related circuit component.

In some possible implementations, the communication apparatus 800 can correspondingly implement behavior and functions of the remote UE in the method embodiments. For example, the communication apparatus 800 may be remote UE, or may be a component (for example, a chip or a circuit) used in the remote UE. The transceiver module 801 may be configured to support communication between the remote UE and another network entity, for example, support communication between the remote UE and relay UE and/or a network device shown in any one of the embodiments in FIG. 4 to FIG. 7. The processing module 802 is configured to control and manage an action of the remote UE. For example, the processing module 802 is configured to support the remote UE in performing all operations other than transmitting and receiving of the remote UE in any one of the embodiments in FIG. 4 to FIG. 7. The transceiver module 801 is configured to perform all receiving or sending operations performed by the remote UE, and/or configured to support another process of the technology described in this specification. For example, the transceiver module 801 is configured to support the remote UE in performing all receiving or sending operations performed by the remote UE in any one of the embodiments in FIG. 4 to FIG. 7.

In some embodiments, the transceiver module 801 is configured to send a second message to the first device, where the second message indicates that the communication apparatus 800 needs to update a radio access notification area (RNA).

The transceiver module 801 is further configured to send a fourth message to the first device, where the fourth message carries a first paging parameter, and the first paging parameter is used by the first device to listen to paging from a network device for the communication apparatus 800.

In an optional implementation, the transceiver module 801 is further configured to receive a fifth message from at least one first device, where the fifth message indicates an RNA corresponding to the first device.

The processing module 802 selects some first device from the at least one first device based on the RNA of each first device.

In a possible implementation, the fourth message further carries a second paging parameter, and the second paging parameter is used to listen to paging from a core network device.

In some other embodiments, the processing module 802 is configured to generate a third message, where the third message indicates that the communication apparatus 800 establishes or resumes a connection to the network device, and the third message further indicates a cause for the communication apparatus 800 to establish or resume the connection; and the transceiver module 801 is configured to send the third message to the first device.

In an optional implementation, the third message includes a third indication, where

Alternatively, the third indication indicates that the cause for resuming or establishing the connection is that the communication apparatus 800 initiates data (mo-data).

Alternatively, the third indication indicates that the cause for resuming or establishing the connection is that the communication apparatus 800 initiates signaling (mo-signaling).

Alternatively, the third indication indicates that the cause for resuming or establishing the connection is that the communication apparatus 800 initiates a voice (mo- Voice Call), a video (mo-VideoCall), or an SMS message (mo-SMS).

Alternatively, the third indication indicates that the cause for resuming or establishing the connection is that the communication apparatus 800 is paged for access (mt-Access).

Alternatively, the third indication indicates that a cause for resuming or establishing the connection is that the communication apparatus 800 performs RNAU ma-Update.

It should be understood that the processing module 802 in this embodiment of this application may be implemented by a processor or a processor-related circuit component, and the transceiver module 801 may be implemented by a transceiver or a transceiver-related circuit component.

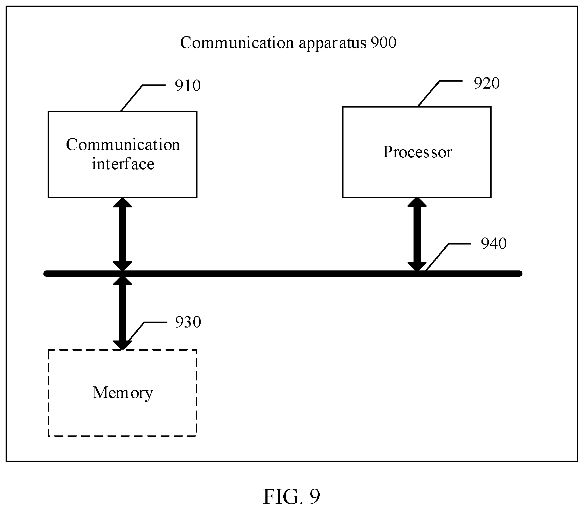

FIG. 9 shows a communication apparatus 900 according to an embodiment of this application. The communication apparatus 900 may be relay UE, and can implement functions of the relay UE in the method provided in embodiments of this application. Alternatively, the communication apparatus 900 may be a network device, and can implement functions of the network device in the method provided in embodiments of this application. Alternatively, the communication apparatus 900 may be remote UE, and can implement functions of the remote UE in the method provided in embodiments of this application. Alternatively, the communication apparatus 900 may be an apparatus that can support the relay UE, the network device, or the remote UE in implementing a corresponding function in the method provided in embodiments of this application. The communication apparatus 900 may be a chip system. In this embodiment of this application, the chip system may include a chip, or may include a chip and another discrete component.

In hardware implementation, the transceiver module 801 may be a transceiver, and the transceiver is integrated in the communication apparatus 900, to form a communication interface 910.

The communication apparatus 900 includes at least one processor 920. The processor 920 may be a CPU, a microprocessor, an ASIC, or one or more integrated circuits configured to control program execution of the solutions in this application, and is configured to implement or support the communication apparatus 900 in implementing the function of the relay UE, the network device, or the remote UE in the method provided in embodiments of this application. For details, refer to detailed descriptions in the method example. Details are not described herein again.

The communication apparatus 900 may further include at least one memory 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions and/or the data stored in the memory 930, so that the communication apparatus 900 implements a corresponding method. At least one of the at least one memory may be included in the processor 920.

The communication apparatus 900 may further include a communication interface 910, and is configured to communicate with another device or communication network, such as a radio access network (radio access network, RAN), a wireless local area network (wireless local area networks, WLAN), or a wired access network by using any apparatus of a transceiver type. The communication interface 910 is configured to communicate with another device via a transmission medium so that an apparatus in the communication apparatus 900 can communicate with the another device. For example, when the communication apparatus 900 is a network device, the another device is relay UE or remote UE. Alternatively, when the communication apparatus is relay UE, the another device is a network device or remote UE. Alternatively, when the communication apparatus is remote UE, the another device is a network device or relay UE. The processor 920 may send and receive data using the communication interface 910. The communication interface 910 may be specifically a transceiver.

This embodiment of this application does not limit a specific connection medium between the communication interface 910, the processor 920, and the memory 930. In this embodiment of this application, in FIG. 9, the memory 930, the processor 920, and the communication interface 910 are connected through a bus 940, and the bus is represented using a bold line in FIG. 9. A connection manner between other components is merely an example for description, and imposes no limitation. The bus may be classified into an address bus, a data bus, a control bus, and the like. For ease of representation, only one thick line is used to represent the bus in FIG. 9, but this does not mean that there is only one bus or only one type of bus.

In this embodiment of this application, the processor 920 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

The memory 930 may be a ROM, another type of static storage device that can store static information and instructions, a RAM, or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory 930 is not limited thereto. The memory may exist independently, and is connected to the processor through the bus 940. The memory may alternatively be integrated with the processor.

The memory 930 is configured to store computer-executable instructions for performing the solutions in this application, and the processor 920 controls execution. The processor 920 is configured to execute the computer-executable instructions stored in the memory 930, to implement the communication method provided in the foregoing embodiments of this application.

Optionally, the computer-executable instructions in this embodiment of this application may also be referred to as application program code. This is not specifically limited in this embodiment of this application.

It should be noted that the communication apparatus in the foregoing embodiments may be a terminal, a circuit, a chip used in a terminal, or another combined component, component, or the like that has a function of the terminal. When the communication apparatus is a terminal, the transceiver module may be a transceiver, and may include an antenna, a radio frequency circuit, and the like. The processing module may be a processor, for example, a central processing unit (central processing unit, CPU). When the communication apparatus is a component that has a function of the terminal, the transceiver module may be a radio frequency unit, and the processing module may be a processor. When the communication apparatus is a chip or a chip system, the transceiver module may be an input/output circuit and/or a communication interface of the chip or the chip system, and the processing module may be a processor or an integrated circuit of the chip or the chip system.

An embodiment of this application further provides a communication system. Specifically, the communication system includes relay UE, a network device, or remote UE, or may further include more network devices, a plurality of relay UEs, and more remote UEs. For example, the communication system includes relay UE, a network device, or remote UE configured to implement related functions in any one of the embodiments in FIG. 4 to FIG. 7.

The relay UE is separately configured to implement functions of the relay UE part related to embodiments of this application, for example, configured to implement functions of the relay UE part related to the embodiments shown in FIG. 4 to FIG. 7. The network device is separately configured to implement functions of the network device part in embodiments of this application, for example, configured to implement functions of the network device part in the embodiments shown in FIG. 4 to FIG. 7. The remote UE is configured to implement functions of the remote UE part related to embodiments of this application, for example, configured to implement functions of the remote UE related to the embodiments shown in FIG. 4 to FIG. 7. For details, refer to the related descriptions in the method embodiment. Details are not described herein again.

An embodiment of this application further provides a computer-readable storage medium, including instructions. When the instructions are run on a computer, the computer performs the method performed by relay UE, a network device, or remote UE in any one of the embodiments shown in FIG. 4 to FIG. 7.

An embodiment of this application further provides a computer program product, including instructions. When the computer program product is run on a computer, the computer performs the method performed by relay UE, a network device, or remote UE in any one of the embodiments shown in FIG. 4 to FIG. 7.

An embodiment of this application provides a chip system. The chip system includes a processor, may further include a memory, and is configured to implement functions of the relay UE, the network device, or the remote UE in the foregoing methods. The chip system may include a chip, or may include a chip and another discrete component.

All or some of the methods in embodiments of this application may be implemented by using software, hardware, firmware, or any combination thereof. When the software is used for implementation, all or some of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
generating, by a first device, a first message, wherein the first message is used to resume a connection to a network device, and the first message further indicates a cause for the first device to resume the connection; and
sending, by the first device, the first message to the network device, wherein sending of the first message is triggered by a radio access network notification area RNA update sent by a second device, or the connection resumed by the first device is used by the second device to update an RNA.

2. The method according to claim 1, wherein
the first message comprises a first indication, and the first indication indicates the cause for the first device to resume the connection; or
the first message comprises a first indication and a second indication, the first indication indicates the cause for the first device to resume the connection, and the second indication indicates whether the first device resumes the connection for the second device; or
the first message is sent over a first common control channel, and indicates that the first device resumes the connection for the second device, the first message comprises a first indication, and the first indication indicates the cause for the first device to resume the connection; or
the first message is sent by using a resource comprised in a random access response message received by the first device, the first message comprises a first indication, the first indication indicates the cause for the first device to resume the connection, and before the first message is sent, a random preamble sent by the first device to the network device indicates that the first device performs random access for the second device; or
the first message is sent over a first common control channel, and indicates the first device to resume the connection for the second device; or
the first message is sent by using a resource comprised in a random access response message received by the first device, and before the first message is sent, a random preamble sent by the first device to the network device indicates that the first device performs random access for the second device.

3. The method according to claim 1 or 2, wherein the method further comprises:
receiving, by the first device, a second message from the second device, wherein the second message indicates that the second device needs to update the RNA; or
if access network area code RAN-Areacode of a cell on which the first device currently camps does not belong to the RNA of the second device, determining, by the first device, to send the first message to the network device.

4. The method according to claim 3, wherein
the second message comprises RAN-Areacode comprised in the RNA of the second device; or
the second message comprises RAN-Areacode of a cell on which the second device currently camps.

5. The method according to any one of claims 1 to 4, wherein the method further comprises:
broadcasting, by the first device, a fifth message, wherein the fifth message comprises the RAN-Areacode of the cell on which the first device camps.

6. The method according to any one of claims 1 to 5, wherein the method further comprises:
after the second device completes the RNA update, receiving, by the first device, a fourth message from the second device, wherein the fourth message carries a first paging parameter, and the first paging parameter is used by the first device to listen to paging from the network device for the second device.

7. The method according to claim 6, wherein the fourth message further carries a second paging parameter, and the second paging parameter is used to listen to paging from a core network device.

8. The method according to claim 7, wherein the fourth message further carries an updated RNA of the second device.

9. The method according to any one of claims 2 to 8, wherein
the first indication indicates that the first device expects to keep in a radio resource control RRC connected state; or
the first indication indicates that a cause for resuming or establishing a connection is that the second device initiates signaling ro-signaling; or
the first indication indicates that a cause for resuming or establishing a connection is that the second device performs RNAU r-rna-Update; or
the first indication indicates that a cause for resuming or establishing a connection is performing a relay (relay) service.

10. The method according to any one of claims 2 to 9, wherein
the first indication indicates that the cause for resuming or establishing the connection is that the first device initiates data mo-data; or
the first indication indicates that the cause for resuming or establishing the connection is that the first device initiates signaling mo-signaling; or
the first indication indicates that the cause for resuming or establishing the connection is that the first device initiates a voice mo-VoiceCall, a video mo-VideoCall, or an SMS message mo-SMS; or
the first indication indicates that the cause for resuming or establishing the connection is that the first device is paged for access mt-Access; or
the first indication indicates that the cause for resuming or establishing the connection is that the first device performs RNAU rna-Update and the first device keeps in the RRC connected state.

11. The method according to any one of claims 2 to 10, wherein
the first indication is sent by a non-access stratum NAS of the first device to an RRC layer of the first device when the first device determines that the second device needs to send signaling or data; or
the first indication is determined by an RRC layer of the first device when the first device determines that the second device needs to send signaling or data; or
a channel for sending the first message is determined by an RRC layer of the first device when the first device determines that the second device needs to send signaling or data.

12. The method according to any one of claims 1 to 11, wherein the first message further comprises assistance information, the assistance information indicates that the first device needs to update an RNA for at least one second device, and the at least one second device comprises the second device.

13. The method according to any one of claims 1 to 12, wherein the method further comprises:
receiving, by the first device, an RRC release message from the network device, wherein the RRC release message indicates the first device and the second device to enter an RRC inactive state.

14. The method according to claim 13, wherein the RRC release message comprises release configuration information of the second device and identification information of the second device.

15. The method according to claim 13, wherein the method further comprises:
sending, by the first device, the RRC release message to the second device, wherein the RRC release message comprises release configuration information of the second device.

16. A communication method, comprising:
receiving, by a network device, a first message from a first device, wherein the first message is used to establish or resume a connection to the network device, and the first message further indicates a cause for the first device to establish or resume the connection; and
determining, by the network device based on the first message, that the first device establishes or resumes the connection due to a service of a second device, wherein the second device is a terminal device that connects to the network device by using the first device.

17. The method according to claim 16, comprising:
determining, by the network device based on the first message, that the cause for the first device to establish or resume the connection is that the second device performs radio access network notification area update RNAU, and indicating, by the network device, the first device to keep in a radio resource control RRC connected state or an RRC inactive state; or
determining, by the network device based on the first message, that the cause for the first device to establish or resume the connection is that the first device performs RNAU.

18. The method according to claim 16 or 17, wherein
the first message comprises a first indication, and the first indication indicates the cause for the first device to establish or resume the connection; or
the first message comprises a first indication and a second indication, the first indication indicates the cause for the first device to establish or resume the connection, and the second indication indicates whether the first device establishes or resumes the connection for the second device; or
the first message is sent over a first common control channel, and indicates that the first device establishes or resumes the connection for the second device, the first message comprises a first indication, and the first indication indicates the cause for the first device to establish or resume the connection; or
the first message is sent by using a resource comprised in a random access response message received by the first device, the first message comprises a first indication, the first indication indicates the cause for the first device to establish or resume the connection, and before the first message is sent, a random preamble sent by the first device to the network device indicates that the first device performs random access for the second device; or
the first message is sent over a first common control channel, and indicates that the first device establishes or resumes the connection for the second device; or
the first message is sent by using a resource comprised in a random access response message received by the first device, and before the first message is sent, a random preamble sent by the first device to the network device indicates that the first device performs random access for the second device.

19. The method according to claim 18, wherein the first indication indicates that the first device expects to keep in the RRC connected state; or
the first indication indicates that the cause for resuming or establishing the connection is that the second device initiates data ro-data; or
the first indication indicates that the cause for resuming or establishing the connection is that the second device initiates signaling ro-signaling; or
the first indication indicates that the cause for resuming or establishing the connection is that the second device initiates a voice ro-VoiceCall, a video ro-VideoCall, or an SMS message ro-SMS; or
the first indication indicates that the cause for resuming or establishing the connection is that the second device is paged for access rt-Access; or
the first indication indicates that the cause for resuming or establishing the connection is that the second device performs radio access network notification area update RNAU r-rna-Update; or
the first indication indicates that the cause for resuming or establishing the connection is performing a relay (relay) service.

20. The method according to claim 18 or 19, wherein the first indication indicates that the first device expects to keep in the RRC connected state, and the network device determines that the first device keeps in the RRC connected state.

21. The method according to any one of claims 16 to 20, wherein the first message further comprises assistance information, the assistance information indicates that the first device needs to update an RNA for at least one second device, and the at least one second device comprises the second device.

22. The method according to claim 21, wherein the method further comprises:
configuring, by the network device, an uplink grant resource for the first device, wherein the uplink grant resource is used by the first device to send the assistance information from the second device.

23. The method according to any one of claims 16 to 22, wherein the method further comprises:
sending, by the network device, an RRC release message to the first device, wherein the RRC release message indicates the first device and the second device to enter the RRC inactive state.

24. The method according to claim 23, wherein the RRC release message comprises release configuration information of the second device and identification information of the second device.

25. A communication method, comprising:
sending, by a second device, a second message to a first device, wherein the second message indicates that the second device needs to update a radio access notification area RNA; and
sending, by the second device, a fourth message to the first device, wherein the fourth message carries a first paging parameter, and the first paging parameter is used to listen to paging from a network device for the second device.

26. The method according to claim 25, wherein the method further comprises:
receiving, by the second device, a fifth message from at least one first device, wherein the fifth message indicates an RNA corresponding to the first device; and
selecting, by the second device, the first device from the at least one first device based on an RNA of each first device.

27. The method according to claim 25 or 26, wherein the fourth message further carries a second paging parameter, and the second paging parameter is used to listen to paging from a core network device.

28. A communication apparatus, comprising a transceiver module and a processing module that are coupled to each other, and configured to perform the method according to any one of claims 1 to 15, or perform the method according to any one of claims 16 to 24, or perform the method according to any one of claims 25 to 27.

29. A communication apparatus, comprising a processor and a memory, wherein the memory is configured to store a computer program, and the processor is configured to execute the computer program stored in the memory, so that the communication apparatus performs the method according to any one of claims 1 to 15, or performs the method according to any one of claims 16 to 24, or performs the method according to any one of claims 25 to 27.

30. A computer-readable storage medium, wherein the computer-readable storage medium is configured to store a computer program, and when the computer program is run on a computer, the computer is enabled to perform the method according to any one of claims 1 to 15, or the computer is enabled to perform the method according to any one of claims 16 to 24, or the computer is enabled to perform the method according to any one of claims 25 to 27.
